# EUROPEAN PATENT SPECIFICATION

(11) **EP 2 107 279 B1**
(45) Date of publication and mention of the grant of the patent: **26.09.2012**
(21) Application number: 09250940.5
(22) Date of filing: 30.03.2009
(51) Int. Cl.: F16H 63/30, F16H 59/00

(54) **Manual transmission comprising a gear whine prevention device**
Handschaltgetriebe mit Schaltgeräuschverhinderungsvorrichtung
Transmission manuelle comprenant un dispositif de prévention du bruit d'engrenage

(30) Priority: 01.04.2008 JP 2008094901
(43) Date of publication of application: 07.10.2009
(73) Proprietor: Toyota Jidosha Kabushiki Kaisha, Toyota-shi, Aichi-ken 471-8571 (JP)
(72) Inventor: Naito, Koji, Toyota-shi, Aichi-ken 471-8571 (JP); Kawarazaki, Hirofumi, Toyota-shi, Aichi-ken 471-8571 (JP)
(74) Representative: Albutt, Anthony John

(56) References cited:
- EP-A- 0 300 843
- JP-A- 58 170 952
- JP-A- 59 194 135

## Description

### TECHNICAL FIELD

The present invention relates to a transmission comprising a gear whine prevention device mounted in an automobile, etc.

### BACKGROUND ART

Conventionally, although a synchronizer has been provided for a forward travel gear of a manual transmission of a vehicle, a synchronizer has often not been provided for a reverse gear thereof. This is because, normally, a reverse shift operation changing from a forward travel gear to a reverse gear is performed with a clutch released and the vehicle in a stationary condition, and therefore, it is assumed that a reverse drive gear provided on an input shaft of a gear-change transmission and a reverse driven gear provided on a countershaft (also called an "output shaft" in the case of front-engine, front-drive (FF) vehicles) are both in a stopped condition and that an engagement operation takes place between these stopped-condition gears and a reverse idler gear, also in a stopped condition.

In reality, however, even if the clutch is released, the input shaft may perform inertial rotation as a result of inertia thereof. The likelihood of this type of situation occurring is particularly high immediately after the vehicle has been stopped from a forward travel condition. When, in this type of situation, the reverse idler gear is moved in an axial direction thereof in order to engage with the reverse driven gear, rotating together with the input shaft, this engagement takes place with the reverse drive gear rotating and the reverse idler gear not rotating, and therefore, the engagement operation does not proceed smoothly and an abnormal noise known as "reverse shift gear whine" is produced, causing discomfort to a driver.

A variety of gear whine prevention devices have been proposed with the aim of preventing occurrence of this reverse shift gear whine. In some of these gear whine prevention devices, a gear whine prevention function is activated upon a shift operation performed after a select operation of a gear stick. In such a case, as a gear engagement operation is started immediately after the gear whine prevention function is activated, the period of activation of the gear whine prevention function is extremely short, and therefore, insufficient gear-whine prevention performance is likely.

Accordingly, as disclosed in, for example, JP H5-1059 (Patent Document 1) and JP H8-4849 (Patent Document 2), a gear whine prevention device activating the gear whine prevention function upon performance of the select operation of the gear stick has been proposed.

Patent document 1 discloses a configuration wherein a cam plate having a cam groove is secured to a shift and select shaft (referred to as a "control rod" in Patent Document 1), a pin extends from a side surface of a fork shaft used to establish a forward travel gear and a reverse gear (referred to as a "shift rod" in Patent Document 1) towards the cam plate of the shift and select shaft, and a tip section of the pin engages with the cam groove in a condition of free sliding contact.

With this gear whine prevention device, the fork shaft slides slightly towards a fifth gear side upon a select operation performed towards the reverse gear (that is, upon a rotation operation of the shift and select shaft), and a synchronizer for the fifth gear operates. As a result thereof, the input shaft, performing inertial rotation, is connected to the output shaft, having stopped rotating at the same time as stopping of the vehicle; the rotation of the input shaft is either slowed or stopped; and therefore, the above-explained reverse shift gear whine is prevented from occurring.

In Patent Document 2, furthermore, a gear-stick engagement channel of a fork shaft used to establish a fifth gear and a reverse gear is offset in an axial direction with respect to a gear-stick engagement channel of a fork shaft for establishing another forward travel gear (i.e., a fork shaft for first-gear/second-gear or a fork shaft for third-gear/fourth-gear). Thus, when a select operation is performed towards the reverse gear, the gear stick is engaged with the gear-stick engagement channel of the fork shaft used to establish the fifth gear and the reverse gear, the fork shaft is slid by an amount corresponding to the offset, and a synchronizer for the fifth gear is operated; consequently, reverse shift gear whine is prevented from occurring.

However, in the configuration disclosed both in Patent Document 1 and in Patent Document 2, a gear-stick operation force of the driver is transmitted to the shift and select shaft, and this operation force of the shift and select shaft in a select direction acts directly upon the fork shaft activating the gear whine prevention function (hereinafter referred to as the "pre-balk fork shaft"). That is to say, an operation amount (i.e., a rotation amount) of the shift and select shaft in the select direction is transmitted as is in the form of an amount of motion (i.e., a sliding amount) of the pre-balk fork shaft.

Consequently, in a case wherein a speed of a gear-stick operation by the driver (i.e., a speed of operation in the select direction) is high when either the above-explained gear whine prevention devices are operated, the synchronizer (or synchromesh mechanism) is synchronized with the pre-balk fork shaft being moved by a large degree in an extremely short period of time. As a result thereof, a pressing load required in order to activate the gear whine prevention function (i.e., a load for moving a sleeve of the synchronizer) must be large, and as a force required to be applied by the driver in order to perform a select operation (i.e., an operation load) must also therefore be large, or in other words, a peak value of an operation load increases, operation comfort of the driver is adversely affected.

In certain cases, furthermore, when the sleeve of the synchronizer is slid to a pre-balk position as a result of sliding of the pre-balk fork shaft, it is not possible for the sleeve to move further than the pre-balk position until synchronization has been completed and phases are matched (i.e., until the input shaft is substantially stopped as a result of matching of the rotation speed thereof with the rotation speed of the output shaft). That is to say, further motion of the gear stick in the select direction is not possible until synchronization has been completed in such cases, and operation comfort is also degraded as a result thereof.

Such degradation of operation comfort is particularly prominent in cases wherein sufficient performance of the gear whine prevention function is ensured by using a large amount of sliding motion of the pre-balk fork shaft in order to realize sure and reliable synchronization by the synchronizer.
Japanese Patent JP 59194135 discloses a manual transmission unit according to the preamble of claim 1 for inhibiting the inertial rotation of members such as, for example, a countergear which rotate together with an input shaft under the neutral condition, by actuating a resistance application means upon select operation of a control lever towards the reverse train.

Consequently, a mechanism capable of ensuring favorable operation comfort upon activation of the gear whine prevention function has been in demand for this type of gear whine prevention device.

### SUMMARY OF THE INVENTION

As a solution to the above-explained problems, the present invention aims to provide a transmission comprising a gear whine prevention device capable of achieving favorable operation comfort by suppressing an operation load.

### Problem Solving Principle

Configured so as to achieve the above-mentioned aim, the present invention provides a transmission according to claim 1.

### Solving Means

In specific terms, the present invention assumes a manual transmission comprising a shift and select shaft performing a select operation in a select direction and a shift operation in a shift direction upon a gear-change operation, a forward travel gear fork shaft whereto the shift and select shaft is connected as a result of a select operation of the shift and select shaft to a prescribed forward travel gear select position upon selection of a forward travel gear and operable to execute a gear-change operation to the prescribed forward travel gear while being operable to simultaneously operate a synchronizer by moving in an axial direction thereof pursuant to a shift operation of the shift and select shaft, and a reverse gear shift member whereto the shift and select shaft is operable to be connected as a result of a select operation of the shift and select shaft to a reverse gear select position upon selection of a reverse gear and the reverse gear shift member being operable to execute a gear-change operation to the reverse gear pursuant to a shift operation of the shift and select shaft. A plurality of select operation force transmission members and an operation amount absorbing member are provided on this manual transmission. The select operation force transmission members transmit a select operation force from the shift and select shaft to the synchronizer upon a select operation of the shift and select shaft towards the reverse gear select position so as to operate the synchronizer during a period wherein the select operation is being performed. The operation amount absorbing member is provided between adjacent component members in a select operation force transmission direction of a select operation force transmission path comprising the shift and select shaft, the plurality of select operation force transmission members, and the synchronizer and is configured so as to be capable both of absorbing an amount of motion of a component member disposed upstream thereof in the select operation force transmission direction through elastic deformation and of transmitting the elastic force to a downstream component member disposed downstream thereof in the select operation force transmission direction as a select operation force. The downstream component member is externally fitted to the shift and select shaft so as to be capable of rotating freely relative thereto. The downstream component member includes a sleeve section formed having a cylindrical shape so as to enclose an outer periphery of the shift and select shaft and an engagement section extending from a part of an outer peripheral surface of the sleeve section towards an outer peripheral side. The operation amount absorbing member is adapted to apply an urging force to the downstream component member. The engagement section is adapted to regulate a rotation position of the downstream component member by making contact with a positioning pin provided so as to rotate in unison with the shift and select shaft.

As a result of these particular matters, a select operation force from the driver is transmitted to the shift and select shaft upon selection of the reverse gear, and the shift and select shaft is subjected to a select operation towards the reverse gear select position. When the shift and select shaft is subsequently subjected to a shift operation, a gear-change operation to the reverse gear is executed as a result of an operation of the reverse gear shift member. Meanwhile, the select operation force is transmitted to the synchronizer via the plurality of select operation force transmission members, and the synchronizer operates. That is to say, the synchronizer operates during a period wherein the select operation of the shift and select shaft towards the reverse gear select position is being performed. With a configuration wherein, for example, a synchronizer provided on the input shaft of the transmission is operated, a gear for forward travel is connected (through friction contact) to the input shaft via the synchronizer. That is to say, the input shaft is connected to the output shaft via the synchronizer, the gear for forward travel, and a gear provided on the output shaft so as to rotate in unison therewith. Furthermore, with a configuration wherein a synchronizer provided on the output shaft of the transmission is operated, the gear for forward travel is connected (through friction contact) to the output shaft via the synchronizer. That is to say, the output shaft is connected to the input shaft via the synchronizer, the gear for forward travel, and a gear provided on the input shaft so as to rotate in unison therewith. When a gear-change operation to the reverse gear is performed, the vehicle is in a stopped condition and the output shaft is also stopped.

For this reason, as the input shaft is connected to the output shaft as a result of operation of the synchronizer, even in a situation wherein the input shaft is performing inertial rotation, the rotation thereof is either forcibly stopped or decelerated. Accordingly, the reverse drive gear arranged so as to rotate in unison with the input shaft can, in a stopped or decelerated condition, engage with the reverse idler gear, and therefore, engagement thereof occurs smoothly and the occurrence of gear whine can be prevented.

Furthermore, as this gear whine prevention function is activated upon a select operation of the gear stick, an operation duration thereof can be long, inertial rotation of the input shaft can be sufficiently decelerated, and the occurrence of gear whine can be surely and reliably avoided.

With the present invention, furthermore, the operation amount absorbing member is provided between adjacent component members in the select operation force transmission direction of the select operation force transmission path. Accordingly, in a case wherein, for example, a select operation speed of the driver is high upon selection of the reverse gear as explained above, it is possible to simultaneously absorb an amount of motion of the shift and select shaft towards the reverse gear select position (for example, an amount of rotation) through elastic deformation of the operation amount absorbing member (i.e., to reduce an amount of motion transmitted) and to transmit a select operation force to a component member disposed downstream in the select operation force transmission direction. That is to say, it is possible, through elastic deformation of the operation amount absorbing member, to increase the amount of motion of the shift and select shaft while also reducing an amount of motion of the component member disposed downstream in the select operation force transmission direction. For example, even in a case wherein the sleeve stops at the pre-balk position before completion of synchronization by the synchronizer, the shift and select shaft can move due to elastic deformation of the operation amount absorbing member. Furthermore, the required operation load during the period wherein the operation amount absorbing member is elastically deformed can be a relatively small load sufficient to elastically deform the operation amount absorbing member, and the operation force (i.e., operation load) required to perform the select operation can be reduced. Accordingly, favorable operation comfort can be maintained upon selection of the reverse gear. In addition, after elastic deformation of the operation amount absorbing member, the elastic force thereof is transmitted to a component member disposed downstream in the select operation force transmission direction as a select operation force and the operation of the synchronizer proceeds further, and therefore, the occurrence of gear whine can be surely and reliably prevented. It should be noted that, in a case wherein, for example, the speed of the select operation of the driver is relatively low, etc., transmission of the select operation force towards the synchronizer is performed without elastic deformation of the operation amount absorbing member and the occurrence of gear whine can be prevented.

An example of another resolution means for accomplishing the above-mentioned aim is configured as follows. In specific terms, this example assumes a manual transmission comprising a shift and select shaft performing a select operation through rotation about an axis thereof and a shift operation through motion in an axial direction upon a gear-change operation, a forward travel gear fork shaft whereto the shift and select shaft is connected as a result of a select operation of the shift and select shaft to a prescribed forward travel gear select position upon selection of a forward travel gear and executing a gear-change operation to a prescribed forward travel gear while simultaneously operating a synchronizer by moving in an axial direction pursuant to a shift operation of the shift and select shaft, and a reverse gear shift member whereto the shift and select shaft is connected as a result of a select operation of the shift and select shaft to a reverse gear select position upon selection of a reverse gear and executing a gear-change operation to the reverse gear pursuant to a shift operation of the shift and select shaft. The downstream component member comprises a first head member provided so as to be capable of transmitting a rotation force of the shift and select shaft upon a select operation of the shift and select shaft towards a reverse gear select position. The select operation force transmission comprises at least one intermediate head member rotating as a result of receiving a rotation force of the first head member, and a pre-balk head member arranged on the forward travel gear fork shaft and operating the synchronizer during a period wherein the shift and select shaft is being subjected to a select operation towards the reverse gear by moving the forward travel gear fork shaft in a direction parallel to an axis thereof as a result of receiving a rotation force of the intermediate head member

As a result of these particular matters, the first head member also rotates pursuant to a select operation (i.e., a rotation operation) of the shift and select shaft towards the reverse gear select position upon selection of the reverse gear. The rotation force of the first head member is transmitted to the intermediate head member, and the intermediate head member also rotates. Following this, the rotation force of the intermediate head member is converted into a motion force moving the forward travel gear fork shaft in a synchro operation direction through an action of the pre-balk head member, and consequently, the forward travel gear fork shaft moves in a direction parallel to the axis thereof. The synchronizer is operated as a result of the motion of the forward travel gear fork shaft. That is to say, the forward travel gear fork shaft operates the synchronizer by moving in the synchro operation direction during a period wherein the shift and select shaft is being subjected to the select operation towards the reverse gear. With a configuration wherein, for example, a synchronizer provided on the input shaft of the transmission is operated, a gear for forward travel is connected (through friction contact) to the input shaft via the synchronizer, and the input shaft is connected to the output shaft. Furthermore, with a configuration wherein a synchronizer provided on the output shaft of the transmission is operated, the gear for forward travel is connected (through friction contact) to the output shaft via the synchronizer, and the output shaft is connected to the input shaft.

When a gear-change operation to the reverse gear is performed, the vehicle is in a stopped condition and the output shaft is also stopped. For this reason, as the input shaft is connected to the output shaft as a result of operation of the synchronizer, even in a situation wherein the input shaft is performing inertial rotation, the rotation thereof is either forcibly stopped or decelerated. Accordingly, the reverse drive gear arranged so as to rotate in unison with the input shaft can, in a stopped or decelerated condition, engage with the reverse idler gear, and therefore, engagement thereof occurs smoothly and the occurrence of gear whine can be prevented.

Thus, with this resolution means, the rotation force of the shift and select shaft is transmitted to the pre-balk head member via the first head member and the intermediate head member, and when motive energy is transmitted from the intermediate head member to the pre-balk head member, the rotation force is converted into a motion force in the synchro operation direction. Although a load produced upon operation of the gear whine prevention device (i.e., a pre-balk load) acts on the intermediate head member from the pre-balk fork shaft (or a forward travel gear fork shaft) in an opposite direction to the synchro operation direction, the shift and select shaft applies an urging force in the rotation direction to the intermediate head member, and therefore, the pre-balk load does not act directly on the shift and select shaft. That is to say, the reaction force from the pre-balk fork shaft can be sufficiently received by restricting motion of the intermediate head member in a direction parallel to the axis thereof. Accordingly, an amount of motion of the pre-balk fork shaft required in order to activate the gear whine prevention function, or in other words, an amount of motion required to operate the synchronizer, can be large, and the reliability of the gear whine prevention function can be improved.

With this resolution means also, the operation amount absorbing member is arranged between adjacent component members in the select operation force transmission direction of the select operation force transmission path. Accordingly, as with the above-explained resolution means, when, for example, a select operation speed of the driver is high upon selection of the reverse gear, the required operation load during the period wherein the operation amount absorbing member is elastically deformed can be a relatively small load sufficient to elastically deform the operation amount absorbing member, and the operation force (i.e., operation load) required to perform the select operation can be reduced. Accordingly, favorable operation comfort can be maintained upon selection of the reverse gear. In addition, after elastic deformation of the operation amount absorbing member, the elastic force thereof is transmitted to a component member disposed downstream in the select operation force transmission direction as a select operation force and the operation of the synchronizer proceeds further, and therefore, the occurrence of gear whine can be surely and reliably prevented.

Concrete examples of an arrangement format of the operation amount absorbing member include the following. Specifically, the first head member is fitted to an outer periphery of the shift and select shaft so as to be capable of rotating relative thereto. Furthermore, the operation amount absorbing member comprises a coil spring extending between the first head member and the shift and select shaft and is configured so as both to absorb, through elastic deformation thereof in a circumferential direction, an amount of rotation of the shift and select shaft upon receipt thereby of the select operation force and to rotate the first head member by transmitting the select operation force to the first head member.

That is to say, with this configuration, the amount of rotation of the first head member can be set smaller than the amount of rotation of the shift and select shaft by an amount equivalent to the amount of elastic deformation of the operation amount absorbing member in a circumferential direction. Accordingly, the operation force (i.e., operation load) required to perform a select operation can be freely adjusted by suitably selecting the spring coefficient of the operation amount absorbing member. Therefore, by applying an operation amount absorbing member having a small spring coefficient, the operation force required upon a select operation can be significantly reduced and operation comfort can be significantly improved.

Concrete examples of a configuration wherein the reaction force from the pre-balk fork shaft produced upon operation of the gear whine prevention device is received by the intermediate head member include the following. Specifically, a stopper means is provided to enable the intermediate head member to receive the reaction force from the pre-balk head member when the forward travel gear fork shaft is moved in a direction parallel to the axis thereof as a result of application of the rotation force from the intermediate head member to the pre-balk member by restricting motion of the intermediate head member in a direction parallel to an axis thereof, or in other words, a direction of operation of the reaction force from the pre-balk head member.

That is to say, the intermediate head member is prevented by the stopper means from moving in a direction parallel to the axis of action of the reaction force from the pre-balk head member upon operation of the gear whine prevention device. Accordingly, almost all of an amount of motion generated upon conversion of the rotation force of the intermediate head member into a motion force moving the pre-balk head member in a direction parallel to the axis thereof can be obtained as an amount of motion of the forward travel gear fork shaft (also called the "pre-balk fork shaft" in certain cases hereinafter) in a direction parallel to the axis thereof, an amount of motion of the pre-balk fork shaft required in order to activate the gear whine prevention function, or in other words, an amount of motion required to operate the synchronizer, can be large.

With the gear whine prevention device according to the present invention, the synchronizer operates only during a period wherein the shift and select shaft is being subjected to a select operation towards the reverse gear, and operation of the synchronizer is stopped when the shift and select shaft is subjected to a shift operation towards the reverse gear. Concrete examples of a configuration for realization thereof include the following. Upon the shift and select shaft being subjected to a shift operation to the reverse gear shift position during selection of the reverse gear, the first head member also moves in the axial direction pursuant to motion of the shift and select shaft in the axial direction thereof, and as a result thereof, the first head member withdraws from the intermediate head member in the axial direction, causing the application of rotation force to the intermediate head member to be released, and the urging force being applied by the intermediate head member to the pre-balk head member and moving the forward travel gear fork shaft in a direction parallel to the axial direction thereof is also released.

By stopping operation of the synchronizer substantially simultaneously with completion of the select operation of the shift and select shaft towards the reverse gear in this way, the synchronizer is returned to the neutral position thereof upon establishment of the reverse gear. As a result thereof, a duration of operation of the synchronizer can be suppressed to a minimum necessary level, and adverse effects of operation of the synchronizer over long periods of time, such as an increase in an amount of generated heat, etc., can be avoided.

If the synchronizer operates upon return of the shift and select shaft from the shift position for the reverse gear to the neutral position, a shift load (i.e., a force required to operate the gear stick) required for this unnecessary operation of the synchronizer is produced, leading to deterioration of the shift-operation comfort of the gear stick. In consideration of this point, the present invention is configured as follows. Specifically, the intermediate head member is capable of moving freely in a direction parallel to the axis of the shift and select shaft and is configured so as to be capable of performing a withdrawal operation in a direction parallel to the axis as a result of receiving a pressing force from the first head member in a direction parallel to the axis upon return of the shift and select shaft to a neutral position from the shift position for the reverse gear.

In such a case, it is preferable that the configuration comprises an urging means applying to the intermediate head member an urging force towards a rotation direction initial position whereat the rotation force from the first head member is not received and an urging force towards an axial direction initial position whereat a pressing force from the first head member in a direction parallel to the axis thereof is not received.

As a result thereof, when the shift and select shaft is returned from the shift position for the reverse gear to the neutral position, the intermediate head member performs only a withdrawal operation in a direction parallel to the axis thereof and rotation force is not transmitted from the intermediate head member to the pre-balk head member. That is to say, the forward travel gear fork shaft is not moved by the pre-balk head member in a direction parallel to the axis thereof, and therefore, the synchronizer is not operated, and in addition, the intermediate head member is the only member moved pursuant to motion of the shift and select shaft in the axial direction thereof. Consequently, the shift load can be reduced and deterioration of the shift-operation comfort of the gear stick does not occur. It should be noted that, by providing the above-explained urging means, it is possible to return the intermediate head member quickly to the initial position and to improve the responsiveness of the operation of the intermediate head member.

The present invention provides, in a transmission path transmitting to the synchronizer the select operation force acting on the shift and select shaft upon a gear-change operation to the reverse gear, an operation amount absorbing member capable of absorbing the select operation amount through elastic deformation. Accordingly, the operation force (i.e., operation load) required to perform a select operation can be reduced and favorable operation comfort can be maintained upon selection of the reverse gear.

### BRIEF DESCRIPTION OF THE DRAWINGS

FIG. 1 is a cross-section view showing a gear layout of a manual transmission according to an embodiment of the present invention.

FIG. 2 is a schematic view showing a gearshift pattern of a six-speed manual transmission.

FIG. 3 is a cross-section view of each forward travel gear engagement section of a shift and select mechanism and peripheral sections thereof as seen from an axial direction of a shift and select shaft.

FIG. 4 is a cross-section view of an engagement section of a fifth-gear/sixth-gear fork shaft and a third synchromesh mechanism.

FIG. 5 is a cross-section view of a gear whine prevention device, shift forks, and peripheral sections thereof as seen from an axial direction of the shift and select shaft.

FIG. 6 is a view showing an axial-direction positional relationship of a first head of the shift and select shaft, a second head of a third-gear/fourth-gear fork shaft, and a third head of a fifth-gear/sixth-gear fork shaft.

FIG. 7 is a cross section view showing an urging mechanism provided on the third-gear/fourth-gear fork shaft.

FIGs. 8(a) to 8(c) show a condition before a reverse shift operation, where FIG. 8(a) is a view of the gear whine prevention device as seen from the axial direction of the shift and select shaft, FIG. 8(b) is a view showing a positional relationship of the second head and the third head as seen front a direction of an arrow B of FIG. 8(a), and FIG. 8(c) is a view showing a positional relationship of an arm section of a gearshift inner lever and the heads.

FIG. 9 is an enlarged view of a pre-balk pressing section of the second head as seen from the direction of the arrow B of FIG. 8(a).

FIGs. 10(a) to 10(c) are views corresponding to FIGs. 8(a) to 8(c), respectively, upon starting of a reverse shift operation in a case wherein an operation speed of a gear stick is relatively low.

FIGs. 11(a) to 11(c) are views corresponding to FIGs. 8(a) to 8(c), respectively, when the first head has rotated by a large amount from the condition shown in FIGs. 10(a) to 10(c).

FIGs. 12(a) to 12(c) are views corresponding to FIGs. 8(a) to 8(c), respectively, when the first head has further rotated by a large amount from the condition shown in FIGs. 11(a) to 11(c).

FIGs. 13(a) to 13(c) are views corresponding to FIGs. 8(a) to 8(c), respectively, upon execution of a shift operation towards a reverse position.

FIGs. 14(a) to 14(c) are views corresponding to FIGs. 8(a) to 8(c), respectively, upon the start of a reverse release operation.

FIGs. 15(a) to 15(c) are views corresponding to FIGs. 8(a) to 8(c), respectively, upon starting of a reverse shift operation in a case wherein an operation speed of the gear stick is relatively high.

FIGs. 16(a) to 16(c) are views corresponding to FIGs. 8(a) to 8(c), respectively, when the shift and select shaft has rotated by a large amount from the condition shown in FIGs. 15(a) to 15(c) without rotation of the first head.

FIGs. 17(a) to 17(c) are views corresponding to FIGs. 8(a) to 8(c), respectively, when the first head has rotated by a large amount from the condition shown in FIGs. 16(a) to 16(c) due to an elastic force of a torsion spring.

FIGs. 18(a) to 18(c) are views corresponding to FIGs. 8(a) to 8(c), respectively, when the first head has further rotated by a large amount from the condition shown in FIGs. 17(a) to 17(c).

### DESCRIPTION OF THE PREFERRED EMBODIMENTS

The following is a description of a preferred embodiment of the present invention, with reference to the accompanying drawings. This embodiment explains a case of application of the present invention to a manual transmission mounted in a front-engine, front-drive (FF) vehicle and having a synchronous-engagement configuration, six forward travel gears, and one reverse gear.

### Gear Layout of Manual Transmission

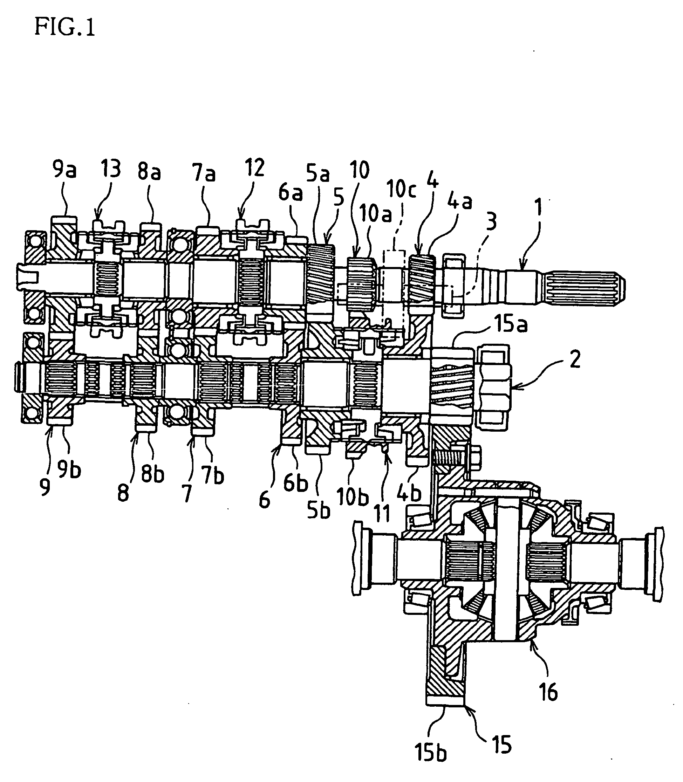

FIG. 1 is a side view showing a cross-section of a part of a gear layout of the manual transmission according to this embodiment. The gear layout shown in FIG. 1 is housed in a transmission case (not shown), and an input shaft 1, an output shaft 2, and a reverse shaft 3 (shown by a double-dot chain line in FIG. 1), disposed so as to be mutually parallel, are supported by the transmission case so as to be capable of rotating freely.

The input shaft 1 is connected via a clutch mechanism to a crankshaft of an engine (not shown), and as a result of an engagement operation of the clutch mechanism, a rotation drive force of the engine is input into the input shaft 1.

A plurality of speed-change gear trains 4-10 are provided between the input shaft 1 and the output shaft 2 in order to establish each of the first to sixth forward travel gears and the reverse gear. In specific terms, gear trains for the forward travel gears comprise a first-gear gear train 4, and a second-gear gear train 5, and a third-gear gear train 6, and a fourth-gear gear train 7, a fifth-gear gear train 8, and a sixth-gear gear train 9, arranged in sequence from the right side to the left side of FIG. 1 in an axial direction. Furthermore, a reverse gear train 10 is provided as a gear train for the reverse gear.

The first-gear gear train 4 comprises a first-gear drive gear 4a attached to the input shaft 1 so as to rotate in unison therewith and a first-gear driven gear 4b assembled to the output shaft 2 so as to rotate freely relative thereto. The first-gear drive gear 4a and the first-gear driven gear 4b are mutually engaged.

The second-gear gear train 5 comprises a second-gear drive gear 5a attached to the input shaft 1 so as to rotate in unison therewith and a second-gear driven gear 5b assembled to the output shaft 2 so as to rotate freely relative thereto. The second-gear drive gear 5a and the second-gear driven gear 5b are mutually engaged.

The third-gear gear train 6 comprises a third-gear drive gear 6a assembled to the input shaft 1 so as to rotate freely relative thereto and a third-gear driven gear 6b attached to the output shaft 2 so as to rotate in unison therewith. The third-gear drive gear 6a and the third-gear driven gear 6b are mutually engaged.

The fourth-gear gear train 7 comprises a fourth-gear drive gear 7a assembled to the input shaft 1 so as to rotate freely relative thereto and a fourth-gear driven gear 7b attached to the output shaft 2 so as to rotate in unison therewith. The fourth-gear drive gear 7a and the fourth-gear driven gear 7b are mutually engaged.

The fifth-gear gear train 8 comprises a fifth-gear drive gear 8a assembled to the input shaft 1 so as to rotate freely relative thereto and a fifth-gear driven gear 8b attached to the output shaft 2 so as to rotate in unison therewith. The fifth-gear drive gear 8a and the fifth-gear driven gear 8b are mutually engaged.

The sixth-gear gear train 9 comprises a sixth-gear drive gear 9a assembled to the input shaft 1 so as to rotate freely relative thereto and a sixth-gear driven gear 9b attached to the output shaft 2 so as to rotate in unison therewith. The sixth-gear drive gear 9a and the sixth-gear driven gear 9b are mutually engaged.

A switching operation (i.e., a gear-change operation) of the speed-change gear trains is performed using three synchromesh mechanisms (or synchronizers) 11, 12, 13. It should be noted that synchromesh mechanisms of the well-known double-cone type are presented as an example in this embodiment.

A first synchromesh mechanism 11 is provided on the output shaft 2 between the first-gear driven gear 4b and the second-gear driven gear 5b. That is to say, when the first synchromesh mechanism 11 operates to the first-gear driven gear 4b side, the first-gear driven gear 4b is connected to the output shaft 2 so as to rotate in unison therewith, and power transmission from the input shaft 1 to the output shaft 2 takes place between the first-gear drive gear 4a and the first-gear driven gear 4b (establishing a first gear). Meanwhile, when the first synchromesh mechanism 11 operates to the second-gear driven gear 5b side, the second-gear driven gear 5b is connected to the output shaft 2 so as to rotate in unison therewith, and power transmission from the input shaft 1 to the output shaft 2 takes place between the second-gear drive gear 5a and the second-gear driven gear 5b (establishing a second gear).

A second synchromesh mechanism 12 is provided on the input shaft 1 between the third-gear drive gear 6a and the fourth-gear drive gear 7a. That is to say, when the second synchromesh mechanism 12 operates to the third-gear drive gear 6a side, the third-gear drive gear 6a is connected to the input shaft 1 so as to rotate in unison therewith, and power transmission from the input shaft 1 to the output shaft 2 takes place between the third-gear drive gear 6a and the third-gear driven gear 6b (establishing a third gear). Meanwhile, when the second synchromesh mechanism 12 operates to the fourth-gear drive gear 7a side, the fourth-gear drive gear 7a is connected to the input shaft 1 so as to rotate in unison therewith, and power transmission from the input shaft 1 to the output shaft 2 takes place between the fourth-gear drive gear 7a and the fourth-gear driven gear 7b (establishing a fourth gear).

A third synchromesh mechanism (referred to as the "synchronizer" for the purpose of the present invention) 13 is provided on the input shaft 1 between the fifth-gear drive gear 8a and the sixth-gear drive gear 9a. That is to say, when the third synchromesh mechanism 13 operates to the fifth-gear drive gear 8a side, the fifth-gear drive gear 8a is connected to the input shaft 1 so as to rotate in unison therewith, and power transmission from the input shaft 1 to the output shaft 2 takes place between the fifth-gear drive gear 8a and the fifth-gear driven gear 8b (establishing a fifth gear). Meanwhile, when the third synchromesh mechanism 13 operates to the sixth-gear drive gear 9a side, the sixth-gear drive gear 9a is connected to the input shaft 1 so as to rotate in unison therewith, and power transmission from the input shaft 1 to the output shaft 2 takes place between the sixth-gear drive gear 9a and the sixth-gear driven gear 9b (establishing a sixth gear).

During forward travel, therefore, except when a gear-change operation is being performed, a rotation drive force of the input shaft 1 is transmitted to the output shaft 2 via one of the speed-change gear trains 4-9 selected as a result of an operation of one of the above-explained synchromesh mechanisms 11, 12, 13. It should be noted that the synchromesh mechanisms 11, 12, 13 are not limited to the double-cone type and synchromesh mechanisms of any other design can be used.

Meanwhile, the reverse gear train 10 comprises a reverse drive gear 10a attached to the input shaft 1 so as to rotate in unison therewith, a reverse driven gear 10b attached to the output shaft 2 so as to rotate in unison therewith, and a reverse idler gear 10c (shown by a double-dot chain line in FIG. 1) assembled to the reverse shaft 3 so as to be capable of sliding freely thereon. The gears 10a, 10b, 10c do not perform power transmission during forward travel. During reverse travel, meanwhile, the synchromesh mechanisms 11, 12, 13 are all set to a neutral condition and the reverse idler gear 10c engages with both the reverse drive gear 10a and the reverse driven gear 10b as a result of motion of the reverse idler gear 10c in an axial direction of the reverse shaft 3, and as a result thereof power is transmitted to the reverse driven gear 10b with a rotation direction thereof reversed from that of the reverse drive gear 10a. Consequently, the output shaft 2 rotates in the opposite direction to that corresponding to a forward travel gear and a drive wheel rotates in a reverse direction. It should be noted that the reverse driven gear 10b is provided on an outer periphery of the first synchromesh mechanism 11 so as to rotate in unison therewith.

A rotation drive force, transmitted to the output shaft 2 either subjected to a speed change with a prescribed gear ratio or having the direction of rotation thereof reversed in this way, is decelerated in line with a final reduction ratio of a final reduction gear train 15, comprising a final drive gear 15a and a final driven gear 15b, and subsequently, is transmitted to a differential device 16. As a result thereof, a drive wheel (not shown) rotates in either a forward direction or a reverse direction.

### Gear Shift Pattern

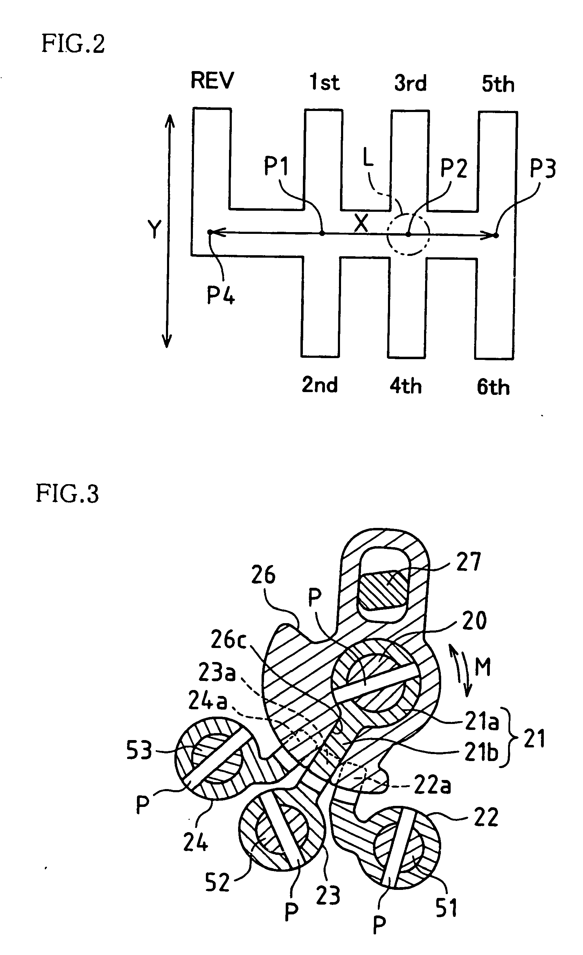

FIG. 2 shows a schematic view of a shift-gate shape constituting a shift pattern of the six-speed manual transmission of this embodiment. A gear stick L, shown by a double-dot chain line in the figure, is configured having a shape making it possible to perform a select operation in a direction shown by an arrow X in FIG. 2 and a shift operation in a direction shown by an arrow Y, perpendicular to the direction of the select operation.

A first-gear/second-gear select position P1, a third-gear/fourth-gear select position P2, a fifth-gear/sixth-gear select position P3, and a reverse select position P4 are arranged in series in the select operation direction.

The gear stick L can be moved to a first-gear position 1st or a second-gear position 2nd through a shift operation at the above-mentioned first-gear/second-gear select position P1 (operation in the direction of the arrow Y). When the gear stick L is operated to the first-gear position 1st, the first synchromesh mechanism 11 operates towards the first-gear driven gear 4b side, and consequently, the first-gear driven gear 4b is connected to the output shaft 2 so as to rotate in unison therewith. Furthermore, when the gear stick L is operated to the second-gear position 2nd, the first synchromesh mechanism 11 operates towards the second-gear driven gear 5b side, and consequently, the second-gear driven gear 5b is connected to the output shaft 2 so as to rotate in unison therewith.

Similarly, the gear stick L can be operated to a third-gear position 3rd or a fourth-gear position 4th through a shift operation at the third-gear/fourth-gear select position P2. When the gear stick L is operated to the third-gear position 3rd, the second synchromesh mechanism 12 operates towards the third-gear drive gear 6a side, and consequently, the third-gear drive gear 6a is connected to the input shaft 1 so as to rotate in unison therewith. Furthermore, when the gear stick L is operated to the fourth-gear position 4th, the second synchromesh mechanism 12 operates towards the fourth-gear drive gear 7a side, and consequently, the fourth-gear drive gear 7a is connected to the input shaft 1 so as to rotate in unison therewith.

In addition, the gear stick L can be operated to a fifth-gear position 5th or a sixth-gear position 6th through a shift operation at the fifth-gear/sixth-gear select position P3. When the gear stick L is operated to the fifth-gear position 5th, the third synchromesh mechanism 13 operates towards the fifth-gear drive gear 8a side, and consequently, the fifth-gear drive gear 8a is connected to the input shaft 1 so as to rotate in unison therewith. When the gear stick L is operated to the sixth-gear position 6th, the third synchromesh mechanism 13 operates towards the sixth-gear drive gear 9a side, and consequently, the sixth-gear drive gear 9a is connected to the input shaft 1 so as to rotate in unison therewith.

In addition, the gear stick L can be moved to a reverse position REV through a shift operation at the reverse select position P4. When the gear stick L is operated to the reverse position REV, all of the synchromesh mechanisms 11, 12, 13 are set to the neutral condition, and in addition, the reverse idler gear 10c engages with both the reverse drive gear 10a and the reverse driven gear 10b as a result of motion thereof in an axial direction of the reverse shaft 3.

### Select and Shift Mechanism

A shift and select mechanism selectively transmitting an operation force of the gear stick L to a synchromesh mechanism 11, 12, 13 or the reverse idler gear 10c in order to establish one of the first to sixth forward travel gears or the reverse gear in accordance with an operation of the gear stick L is explained hereinafter.

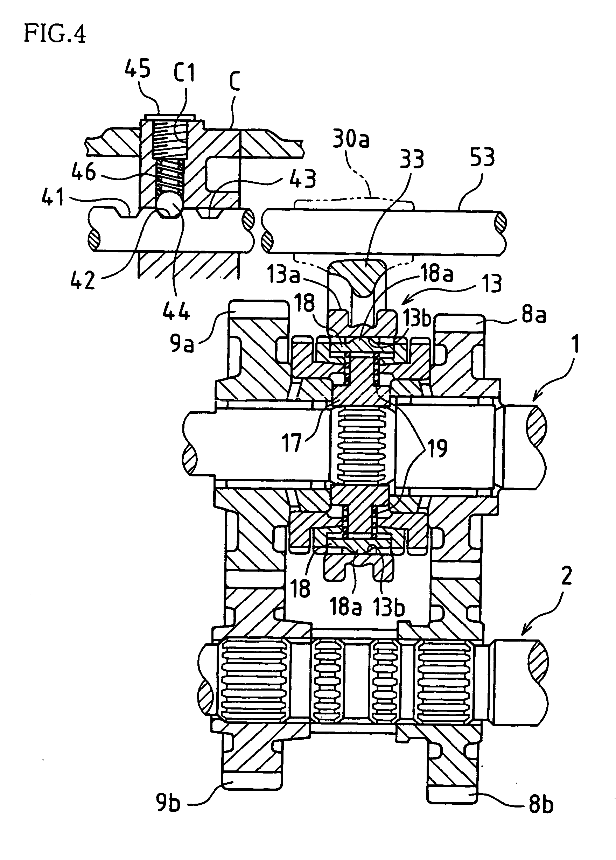

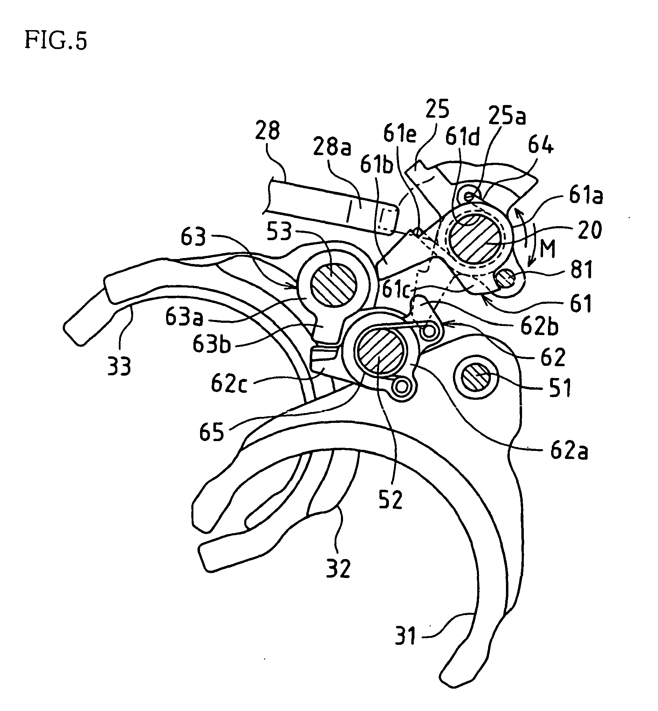

FIG. 3 is a cross-section view of forward travel gear engagement sections 22, 23, 24 of a shift and select mechanism and peripheral sections thereof as seen from an axial direction of a shift and select shaft 20. It should be noted that, in FIG. 3, numerical reference 22 corresponds to a forward travel gear engagement section for first-gear/second-gear provided on a first-gear/second-gear fork shaft 51, numerical reference 23 corresponds to a forward travel gear engagement section for third-gear/fourth-gear provided on a third-gear/fourth-gear fork shaft 52, and numerical reference 24 corresponds to a forward travel gear engagement section for fifth-gear/sixth-gear provided on a fifth-gear/sixth-gear fork shaft 53. FIG. 4 is a cross-section view of an engagement section of the fifth-gear/sixth-gear fork shaft 53 and the third synchromesh mechanism 13. FIG. 5 is a cross-section view of shift forks 31, 32, 33 provided on each of the fork shafts 51, 52, 53 and peripheral sections thereof as seen from an axial direction of the shift and select shaft 20.

As shown in these figures, the gear stick L is connected within the shift and select mechanism by a select cable and a shift cable (not shown) so as to be capable of transmitting an operation force to the shift and select shaft 20 (see FIG. 3 and FIG. 5). Consequently, the shift and select shaft 20 can rotate about an axis (in a direction shown by an arrow M in FIG. 3 and FIG. 5) in response to a select operation of the gear stick L and can slide in an axial direction (i.e., a direction perpendicular to the page of FIG. 3 and FIG. 5) in response to a shift operation of the gear stick L. That is to say, a force of a select operation performed on the gear stick L (i.e., an operation force in a direction shown by an arrow X in FIG. 2) is transmitted via a select cable as a rotation force of the shift and select shaft 20 about an axis thereof and a force of a shift operation performed on the gear stick L (i.e., an operation force in a direction shown by an arrow Y in FIG. 2) is transmitted via a gearshift cable as a slide-motion force of the shift and select shaft 20 in an axial direction thereof. It should be noted that, in FIG. 3, numerical reference 27 corresponds to a select inner lever receiving the select operation force of the gear stick L via the select cable and applying a rotation force to the shift and select shaft 20 about the axis thereof.

Furthermore, a sleeve 13a (see FIG. 4) is provided on each of the synchromesh mechanisms 11, 12, 13, a shift fork 31, 32, 33 is provided for each of the synchromesh mechanism 11, 12, 13, respectively (only the shift fork 33 for fifth-gear/sixth-gear is shown in FIG. 4), and one of the sleeves 13a engages with each of the shift forks 31, 32, 33; in addition, a forward travel gear fork shaft 51, 52, 53 is provided for each of the shift forks 31, 32, 33, respectively (only the forward travel gear fork shaft 53 for fifth-gear/sixth-gear is shown in FIG. 4), and each shift fork 31, 32, 33 is supported by the corresponding forward travel gear fork shaft 51, 52, 53. One of the fork shafts 53 (51, 52) is selected to be capable of transmitting a shift operation force as a result of rotation of the shift and select shaft 20 about the axis thereof in response to a select operation of the gear stick L, the selected fork shaft 53 (51, 52) slides in an axial direction as a result of sliding of the shift and select shaft 20 in response to a shift operation of the gear stick L, and one prescribed synchromesh mechanism 13 (11, 12) is operated via the shift fork 33 (31, 32) provided on the fork shaft 53 (51, 52).

As shown in FIG. 3, a shift inner lever 21 for selecting one of the fork shafts 52 (51, 53) comprises a cylindrical section (or base section) 21a externally fitted to and secured to an outer periphery of the shift and select shaft 20 and an arm section 21b extending in a radial direction from the cylindrical section 21a. Furthermore, an engagement pin P is passed through the shift and select shaft 20 and the cylindrical section 21a, and as a result thereof, the shift inner lever 21 is connected to the shift and select shaft 20 so as to be capable of rotating and sliding in unison therewith.

An interlock plate (or interlock member) 26 is externally fitted to the cylindrical section 21a of the shift inner lever 21 so as to be capable of moving relative thereto in an axial direction and incapable of rotating relative thereto about the axis. An engagement piece channel 26c comprising a pair of mutually opposing guide surfaces making sliding contact with both sides of the arm section 21b of the shift inner lever 21 in the rotation direction is formed in the interlock plate 26 extending in the axial direction. Furthermore, an interval between the guide surfaces of the engagement piece channel 26c regulates simultaneous passage of a plurality of heads 22a, 23a, 24a moving in an axial direction as a result of engagement thereof with the arm section 21b of the shift inner lever 21, or in other words, allows passage of one head 23a (22a, 24a) only. It should be noted that, although the interlock plate 26 is capable of performing relative motion with respect to the cylindrical section 21a of the shift inner lever 21 in the axial direction as explained above, the interlock plate 26 is arranged so as to be incapable of relative motion with respect to the transmission case in the axial direction.

Furthermore, when the gear stick L is subjected to a select operation in a select direction shown by the arrow X in FIG. 2, the operation force thereof is transmitted to the shift and select shaft 20 via the select inner lever 27 by the select cable, and as a result thereof, the shift and select shaft 20 is rotated to a rotation position corresponding to the operation position of the gear stick L. FIG. 3 shows a rotation position of the shift and select shaft 20 and the shift inner lever 21 when the gear stick L has been operated to the third-gear/fourth-gear select position P2.

Furthermore, when the gear stick L is subjected to a shift operation in a shift direction shown by the arrow Y in FIG. 2, the operation force thereof is transmitted to the shift and select shaft 20 via a shift cable, and as a result thereof, the shift and select shaft 20 slides in the axial direction thereof (i.e., a direction perpendicular to the page of FIG. 3) to a slide position corresponding to the operation position of the gear stick L.

Meanwhile, the forward travel gear engagement sections 22, 23, 24 each comprise a pair of heads (or forward travel gear engagement pieces) 22a, 23a, 24a sandwiching a rotation path of the arm section 21b of the shift inner lever 21 at both sides in the axial direction, and furthermore, the forward travel gear engagement sections 22, 23, 24 are provided on the fork shafts 51, 52, 53, corresponding to the synchromesh mechanisms 11, 12, 13. (The first-gear/second-gear fork shaft 51, the third-gear/fourth-gear fork shaft 52, and the fifth-gear/sixth-gear fork shaft 53 are shown in FIG. 3, and only the fifth-gear/sixth-gear fork shaft 53 is shown in FIG. 4.) Furthermore, an engagement pin P is passed through each of the fork shafts 51, 52, 53 and the corresponding forward travel gear engagement section 22, 23, 24, and each of the forward travel gear engagement sections 22, 23, 24 is connected to the corresponding fork shaft 51, 52, 53 so as to slide in unison therewith.

In addition, each of the heads 22a, 23a, 24a is disposed in a position whereat selective engagement by the arm section 21b of the shift inner lever 21 is possible in response to a select operation, and a selected head 22a, 23a, 24a is moved through engagement by the arm section 21b in the axial direction of the shift and select shaft 20. Motion of each pair of heads 22a, 22a, 23a, 23a, 24a, 24a from a neutral position in the axial direction, or in other words, motion of each forward travel gear engagement section 22, 23, 24, comprising each corresponding pair of heads 22a, 22a, 23a, 23a, 24a, 24a, from a neutral position in the axial direction is interlocked with an operation of the synchromesh mechanisms 11, 12, 13 and a subsequent gear-change operation to a forward travel gear.

Furthermore, as shown in FIG. 5, a reverse lever 25 is provided on the shift and select shaft 20 so as to be capable of rotating and sliding in unison therewith. In addition, a reverse arm (or reverse gear shift member) 28 comprising a reverse head 28a is provided in the proximity of the reverse lever 25 on a path of rotation thereof upon rotation of the shift and select shaft 20. A tip section of the reverse arm 28 at a side opposite to that whereat the reverse head 28a is formed engages with the reverse idler gear 10c. Accordingly, in a case wherein the gear stick L is subjected to a select operation as far as the reverse select position P4 of FIG. 2, the reverse lever 25 is rotated to a position opposing the reverse head 28a (see the dashed lined in FIG. 5). If the gear stick L is subjected to a shift operation from this condition to the reverse position REV, the reverse lever 25 is moved, for example, away from the eye in a direction perpendicular to the page of FIG. 5; the reverse lever 25 makes contact with the reverse head 28a, moving the reverse arm 28 in a direction parallel to the axis of the shift and select shaft 20 (hereinafter referred to as the "reverse shift direction"); and as a result thereof, the reverse idler gear 10c moves in the axial direction of the reverse shaft 3, engaging with each of the reverse drive gear 10a and the reverse driven gear 10b.

In a condition wherein the gear stick L is in a neutral position (in this embodiment, the third-gear/fourth-gear select position P2) and none of the gears are established, the arm section 21b of the shift inner lever 21 is also in a neutral position in the axial direction and rotation direction, and the heads 22a, 22a, 23a, 23a, 24a, 24a are arranged adjacent to each other along the rotation path of the arm section 21b at both sides thereof.

Subsequently, the arm section 21b of the shift inner lever 21 rotates in an interlocked manner with the shift and select shaft 20 in response to a select operation of the gear stick L and is selectively moved to a position whereat engagement thereof with the heads 22a, 23a, 24a, disposed at rotation positions corresponding to select positions of the gear stick L, is possible. For example, when the gear stick L is operated to the first-gear/second-gear select position P1, the arm section 21b of the shift inner lever 21 is moved to a position whereat engagement is possible with the heads 22a of the forward travel gear engagement section 22, provided on the first-gear/second-gear fork shaft 51; when the gear stick L is operated to the third-gear/fourth-gear select position P2, the arm section 21b of the shift inner lever 21 is moved to a position whereat engagement is possible with the heads 23a of the forward travel gear engagement section 23, provided on the third-gear/fourth-gear fork shaft 52; and when the gear stick L is operated to the fifth-gear/sixth-gear select position P3, the arm section 21b of the shift inner lever 21 is moved to a position whereat engagement is possible with the heads 24a of the forward travel gear engagement section 24, provided on the fifth-gear/sixth-gear fork shaft 53. Furthermore, when the gear stick L is operated to the reverse select position P4, the shift and select shaft 20 rotates in the counter-clockwise direction with respect to FIG. 5, and therefore, the reverse lever 25 is moved to a position whereat engagement is possible with the reverse head 28a of the reverse arm 28.

By moving the arm section 21b of the shift inner lever 21 such that engagement is possible with a forward travel gear head 23a (22a, 24a) in this way, one fork shaft 52 (51, 53) is selected so as to be capable of transmitting an operation force. Alternatively, the reverse lever 25 can be moved such that engagement is possible with the reverse head 28a of the reverse arm 28.

When the gear stick L is operated in the shift direction from this condition, the operation force thereof is transmitted to the shift and select shaft 20 via a shift cable. As a result thereof, the shift and select shaft 20 slides in the axial direction thereof. Thus, in a case wherein the arm section 21b of the shift inner lever 21 is engaged with any one (forward travel gear) head 23a (22a, 24a), the arm section 21b slides the engaged head 23a (22a, 24a), the one forward travel gear engagement section 23 (22, 24) whereupon the head 23a (22a, 24a) is provided and the fork shaft 52 (51, 53) interlocked therewith, and as a result thereof, one synchromesh mechanism 12 (11, 13) operates.

Furthermore, in a case wherein the reverse lever 25 is engaged with the reverse head 28a, the reverse lever 25 slides the reverse head 28a and the reverse arm 28 in the axial direction, and as a result thereof, the reverse arm 28 moves the reverse idler gear 10c in the axial direction of the reverse shaft 3.

For example, in a case wherein the gear stick L is subjected to a shift operation to the third-gear position 3rd from, as shown in FIG. 3, a condition wherein the arm section 21b of the shift inner lever 21 is positioned such that engagement thereof is possible with the head 23a of the forward travel gear engagement section 23, provided on the third-gear/fourth-gear fork shaft 52, the shift and select shaft 20 moves away from the eye in a perpendicular to the page of FIG. 3, the arm section 21b, the forward travel gear engagement section 23, the third-gear/fourth-gear fork shaft 52, and the shift fork 32 for third-gear/fourth-gear move in the same direction in accordance with the motion of the shift and select shaft 20, and as a result thereof, the second synchromesh mechanism 12 operates towards the third-gear drive gear 6a side, establishing the third gear. Furthermore, in a case wherein the gear stick L is subjected to a shift operation to the fourth-gear position 4th from the condition shown in FIG. 3, the shift and select shaft 20 moves towards the eye in a direction perpendicular to the page of FIG. 3, the arm section 21b, the forward travel gear engagement section 23, the third-gear/fourth-gear fork shaft 52, and the shift fork 32 for third-gear/fourth-gear move in the same direction in accordance with the motion of the shift and select shaft 20, and as a result thereof, the second synchromesh mechanism 12 operates towards the fourth-gear drive gear 7a side, establishing the fourth gear.

FIG. 4 is a cross-section view of an engagement section of the fifth-gear/sixth-gear fork shaft 53 and the third synchromesh mechanism 13. As shown in the figure, the shift fork 33 is mounted on the fifth-gear/sixth-gear fork shaft 53 via a connection section 30a shown by a double-dot chain line, and a tip section of the shift fork 33 is engaged with the sleeve 13a of the third synchromesh mechanism 13.

Furthermore, three lock ball channels 41, 42, 43 corresponding to the fifth gear, the neutral position, and the sixth gear are formed on the fifth-gear/sixth-gear fork shaft 53, and a single lock ball 44 being pressed towards the fork shaft 53 can be selectively inserted into any one of the lock ball channels 41, 42, 43. The lock ball 44 is housed inside a hole C1 formed in the transmission case C and is pressed towards the fifth-gear/sixth-gear fork shaft 53 by a compressed coil spring 46 engaged by a plug 45 housed in the same hole C1. With the above-explained configuration, unintentional gear disengagement can be prevented and a sense of moderated operation can be achieved.

When the fork shafts 51, 52, 53, whereupon the forward travel gear engagement sections 22, 23, 24 are provided, move slightly from the neutral position in the axial direction, so long as the lock ball 44 does not fully leave the lock ball channel 42, a neutral position return force urging return to the neutral position acts on the fifth-gear/sixth-gear fork shaft 5.3 and the forward travel gear engagement sections 22, 23, 24 (or heads 22a, 23a, 24a) secured thereto as a result of the lock ball 44 being pressed towards the lock ball channel 42.

As shown in FIG. 4, furthermore, within the third synchromesh mechanism 13, a plurality of synchronizer keys 18 are provided on an outer diameter side of a synchronizer hub 17 with identical intervals therebetween in a circumferential direction, and a protrusion 18a formed at a central section of each synchronizer key 18 so as to protrude toward an outer peripheral side engages with a channel 13b formed on an inner peripheral surface of the sleeve 13a and oriented in a circumferential direction. The synchronizer key 18 is pressed towards the inner peripheral surface of the sleeve 13a by a key spring 19 provided inside the synchronizer hub 17. With this configuration, in the same way as with the above-explained mechanism comprising the lock ball 44, etc., when the heads 22a, 23a, 24a and the fifth-gear/sixth-gear fork shaft 53 move slightly from a neutral position in an axial direction, so long as the protrusion 18a of the synchronizer key 18 does not fully leave the channel 13b formed on the inner peripheral surface of the sleeve 13a, a neutral position return force urging return to the neutral position acts on the sleeve 13a as a result of the synchronizer key 18 being pressed towards the inner peripheral surface of the sleeve 13a.

It should be noted that the engagement section of the first-gear/second-gear fork shaft 51 and the first synchromesh mechanism 11 and the engagement section of the third-gear/fourth-gear fork shaft 52 and the second synchromesh mechanism 12 are identically configured.

### Configuration of Gear Whine Prevention Device

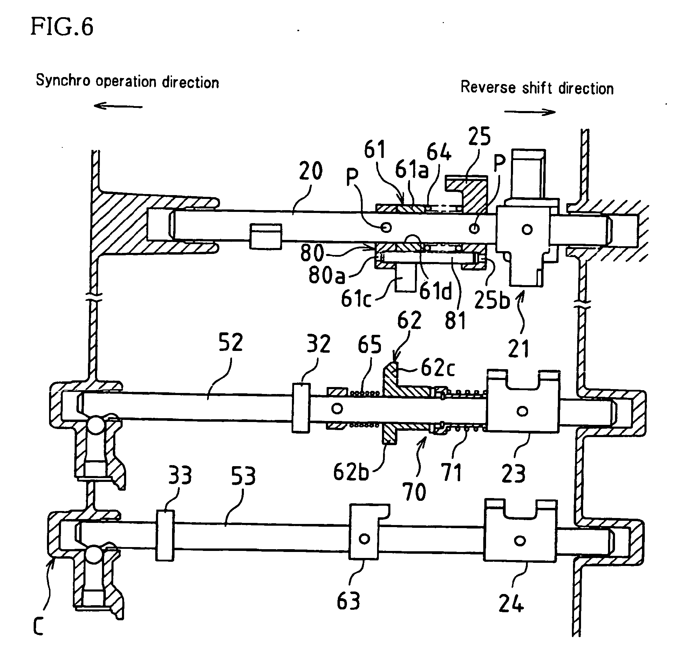

An explanation of the characteristic sections of the gear whine prevention device for a manual transmission according to the present invention is provided hereinafter. The purpose of this gear whine prevention device is to prevent the occurrence of reverse-shift gear whining, and the gear whine prevention device is configured such that, upon a reverse shift operation, the input shaft 1 and the output shaft 2 are connected with rotation of the input shaft 1 sufficiently slowed or stopped by operating a synchromesh mechanism (for example, by operating the third synchromesh mechanism 13 towards a sixth-gear establishment side). Although this embodiment is explained using a gear whine prevention device preventing gear whining through operation of the third synchromesh mechanism 13 as an example, the synchromesh mechanism used to prevent gear whining can be other than the third synchromesh mechanism 13. It should be noted that, in FIG. 6, in order to show an axial-direction positional relationship of a first head 61 of the shift and select shaft 20, a second head 62 of the third-gear/fourth-gear fork shaft 52, and a third head 63 of the fifth-gear/sixth-gear fork shaft 53, the shift and select shaft 20, the third-gear/fourth-gear fork shaft 52, and the fifth-gear/sixth-gear fork shaft 53 are displayed on the same plane; however, the shift and select shaft 20, the third-gear/fourth-gear fork shaft 52, and the fifth-gear/sixth-gear fork shaft 53 are not actually on the same plane.

As shown in FIG. 5 and FIG. 6, the gear whine prevention device comprises the first head (i.e., a first head member and a select operation force transmission member) 61 provided on the shift and select shaft 20, the second head (i.e., an intermediate head member and a select operation force transmission member) 62 provided on the third-gear/fourth-gear fork shaft 52, and the third head (i.e., a pre-balk head member and a select operation force transmission member) 63 provided on the fifth-gear/sixth-gear fork shaft 53. The heads 61, 62, 63 are provided at a position away from the select and shift mechanism, comprising the shift inner lever 21 and the forward travel gear engagement sections 22, 23, 24 (that is, at a position at a prescribed interval from the shift and select mechanism in the axial direction of the shift and select shaft 20).

The first head 61 is externally fitted to the shift and select shaft 20 so as to be capable of rotating freely relative thereto. That is to say, the first head 61 is provided so as to be capable of rotating independent of the shift and select shaft 20. In specific terms, the first head 61 comprises a sleeve section 61a formed having a cylindrical shape so as to enclose an outer periphery of the shift and select shaft 20, a pressing section 61b extending from a part of an outer peripheral surface of the sleeve section 61a towards an outer peripheral side, and an engagement section 61c also extending from a part of an outer peripheral surface of the sleeve section 61a towards an outer peripheral side.

An opening 61d is formed at a central section of the sleeve section 61a. An inner diameter of the opening 61d is set either identical to an outer diameter of the shift and select shaft 20 or slightly larger than the outer diameter of the shift and select shaft 20. The shift and select shaft 20 is passed through the opening 61d such that the first head 61 is supported by the shift and select shaft 20 so as to be capable of rotating freely relative thereto.

Furthermore, the pressing section 61b is formed such that a shape thereof as viewed from a direction parallel to the axis of the shift and select shaft 20 (that is, a shape shown in FIG. 5) is substantially trapezoidal and tapered to become thinner toward an outer peripheral side. A position of the pressing section 61b shown using a solid line in FIG. 5 corresponds to the third-gear/fourth-gear select position P2 of the gear stick L. Furthermore, a position thereof shown using a double-dot chain line corresponds to the reverse select position P4 of the gear stick L (that is, a position whereat a torsion spring 64, explained hereinafter, is not performing a motion-amount absorption operation). That is to say, when the gear stick L is subjected to a select operation from the third-gear/fourth-gear select position P2 to the reverse select position P4, the pressing section 61b rotates from the position shown by the solid line to the position shown by the double-dot chain line in accordance therewith.

Furthermore, a purpose of the engagement section 61c is to regulate a rotation position of the first head 61 by making contact with a positioning pin 81 provided so as to rotate in unison with the shift and select shaft 20 and the reverse lever 25 (a description of an arrangement condition of the positioning pin 81 is provided hereinafter).

A torsion spring 64 realized using a coil spring is wound around the shift and select shaft 20 between the reverse lever 25 and the first head 61, and an urging force in a counter-clockwise direction with respect to FIG. 5 is applied to the first head 61 by the torsion spring 64. In specific terms, a spring engagement hole 25a is formed in the reverse lever 25, and an end section of the torsion spring 64 engages with the spring engagement hole 25a as a result of passage therethrough. Meanwhile, a step section 61e is formed at a boundary section between the sleeve section 61a and the pressing section 61b of the first head 61, and another end section of the torsion spring 64 engages with the step section 61e. Furthermore, the end sections of the torsion spring 64 are engaged with the spring engagement hole 25a and the step section 61e such that the torsion spring 64 is in a condition of elastic deformation with an outer diameter thereof becoming smaller in a circumferential direction. As a result thereof, the torsion spring 64 is arranged such that an urging force in a counter-clockwise direction with respect to FIG. 5 is applied to the first head 61.

Furthermore, as shown in FIG. 6, a select stopper block 80 is provided adjacent to the first head 61. The select stopper block 80 is provided at a position opposite to that of the reverse lever 25 with respect to the first head 61 (i.e., at a left side in FIG. 6), and furthermore, is mounted on the shift and select shaft 20 so as to be capable of rotating and sliding in unison therewith. In terms of a mounting structure thereof, for example, an engagement pin P is passed through the shift and select shaft 20 and the select stopper block 80. Furthermore, in terms of a mounting structure of the reverse lever 25 on the shift and select shaft 20 so as to be capable of rotating and sliding in unison therewith, for example, an engagement pin P is passed through the shift and select shaft 20 and the reverse lever 25.

The positioning pin 81 is arranged so as to extend between the select stopper block 80 and the reverse lever 25. That is to say, a pin insertion hole 80a is formed in the select stopper block 80, a pin insertion hole 25b is formed in the reverse lever 25, and the positioning pin 81 is supported through insertion thereof into the pin insertion holes 80a, 25b. Consequently, the select stopper block 80, the reverse lever 25, and the positioning pin 81 rotate in unison pursuant to rotation of the shift and select shaft 20 without any relative motion therebetween in a circumferential direction about the axis of the shift and select shaft 20.

Although, as explained above, an urging force in a counter-clockwise direction with respect to FIG. 5 is applied to the first head 61 by the torsion spring 64, the engagement section 61c of the first head 61 makes contact with the positioning pin 81, and therefore, a rotation position of the first head 61 is regulated at the contact position. That is to say, in a case wherein the select stopper block 80, the reverse lever 25, and the positioning pin 81 rotate in unison as a result of rotation of the shift and select shaft 20 (i.e., rotation in a counter-clockwise direction with respect to FIG. 5), the positioning pin 81 moves in a direction away from the engagement section 61c of the first head 61, and as a result of application of the urging force by the torsion spring 64, the first head 61 moves in the same direction, following the motion of the positioning pin 81. Furthermore, the first head 61 can, pursuant to sliding of the shift and select shaft 20 in the axial direction, move in the same direction. In other words, when the shift and select shaft 20 rotates pursuant to a select operation of the gear stick L (i.e., an operation in the direction shown by the arrow X in FIG. 2), the first head 61 is capable of rotating in the same direction as the shift and select shaft 20, and when the shift and select shaft 20 slides in the axial direction pursuant to a shift operation of the gear stick L (i.e., an operation in the direction shown by the arrow Y in FIG. 2), the first head 61 is capable of moving in the same axial direction as the shift and select shaft 20.

It should be noted that, in this embodiment, in a case wherein the gear stick L is subjected to a select operation from the third-gear/fourth-gear select position P2 to the fifth-gear/sixth-gear select position P3, the shift and select shaft 20 and the first head 61 rotate in a clockwise direction with respect to FIG. 5, and conversely, in a case wherein the gear stick L is subjected to a select operation from the third-gear/fourth-gear select position P2 to the reverse select position P4, the shift and select shaft 20 and the first head 61 rotate in a counter-clockwise direction with respect to FIG. 5.

The second head 62 is provided so as to be capable of rotating relative to the third-gear/fourth-gear fork shaft 52 and also of moving in an axial direction relative thereto. That is to say, the second head 62 is capable of rotating independent of the third-gear/fourth-gear fork shaft 52, and furthermore, is capable of moving in an axial direction independent of the third-gear/fourth-gear fork shaft 52.

Furthermore, the second head 62 comprises a sleeve section 62a formed having a cylindrical shape so as to enclose an outer periphery of the third-gear/fourth-gear fork shaft 52, a pressed section 62b extending from a part of an outer peripheral surface of the sleeve section 62a towards an outer peripheral side, and a pre-balk pressing section 62c also extending from a part of an outer peripheral surface of the sleeve section 62a towards an outer peripheral side.

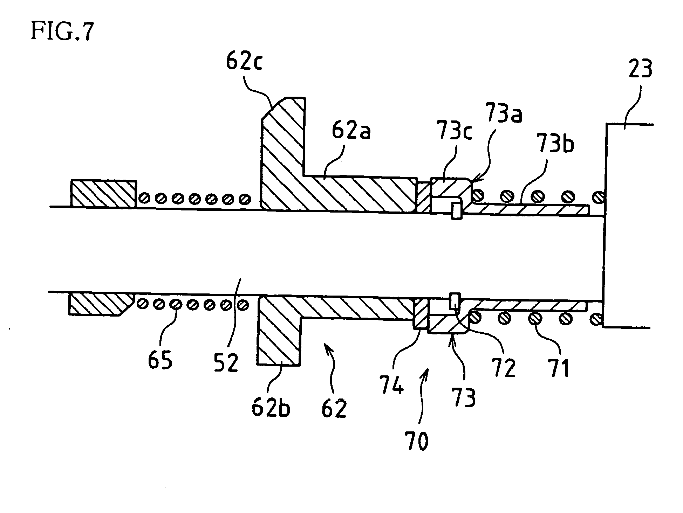

FIG. 7 is a view showing the third-gear/fourth-gear fork shaft 52 in the vicinity of the arrangement position of second head 62 and shows a structure of an urging mechanism (i.e., a waiting mechanism and a stopper means) 70 provided on the third-gear/fourth-gear fork shaft 52. As shown in FIG. 7, the urging mechanism 70 urging the second head 62 in a direction opposite to a shift direction for reverse (in this case, to the left side of FIG. 7 (or towards the eye in a direction perpendicular to the page of FIG. 5)) on the third-gear/fourth-gear fork shaft 52 is provided on the third-gear/fourth-gear fork shaft 52. The direction opposite to the shift direction for reverse is a direction parallel to the axis of the third-gear/fourth-gear fork shaft 52, and furthermore, the direction of operation of the third synchromesh mechanism 13 towards the sixth-gear establishment side upon operation of the gear whine prevention device. Hereinafter, this direction is also referred to as the "synchro operation direction".

The urging mechanism 70 comprises a coil spring (or elastic member) 71 as an urging member urging the second head 62 in the synchro operation direction and a snap ring 72 as a regulating member regulating an amount of motion of the second head 62 by an urging force of the coil spring 71. That is to say, the urging mechanism 70 is configured such that the second head 62 is pressed in the synchro operation direction by the urging force of the coil spring 71 and the amount of motion of the second head 62 in the synchro operation direction is regulated by the snap ring 72.

In specific terms, the snap ring 72 is attached to the third-gear/fourth-gear fork shaft 52 so as to be incapable of motion relative thereto in an axial direction thereof. The coil spring 71 is arranged in a compressed condition between the second head 62 and the forward travel gear engagement section 23 on the third-gear/fourth-gear fork shaft 52. One end of the coil spring 71 (i.e., a right end as shown in FIG. 7) is in contact with the forward travel gear engagement section 23, and another end of the coil spring 71 (i.e., a left end as shown in FIG. 7) is in contact with a step section 73a of a spring seat 73.

The spring seat 73 is formed with a substantially cylindrical shape and arranged so as to be capable of sliding on the third-gear/fourth-gear fork shaft 52. The step section 73a is provided at an intermediate section of the spring seat 73 in an axial direction thereof, a small diameter sleeve section 73b is provided at one side of the step section 73a (i.e., a right end as shown in FIG. 7), and a large diameter sleeve section 73c is provided at another side thereof (i.e., a left end as shown in FIG. 7).

An inner diameter of the small diameter sleeve section 73b is identical to, or slightly larger than, an outer diameter of the third-gear/fourth-gear fork shaft 52, and the spring seat 73 is capable of sliding on the third-gear/fourth-gear fork shaft 52. An inner diameter of the large diameter sleeve section 73c is larger than the outer diameter of the third-gear/fourth-gear fork shaft 52, and the snap ring 72 is provided at an inner side of the large diameter sleeve section 73c. The step section 73a moves towards or away from the snap ring 72 pursuant to motion of the spring seat 73. Furthermore, an outer diameter of the large diameter sleeve section 73c is larger than an outer diameter of the small diameter sleeve section 73b.

A distance between the snap ring 72 and the forward travel gear engagement section 23 is larger than a dimension of the small diameter sleeve section 73b in an axial direction thereof. In addition, a gap is provided between a right end of the small diameter sleeve section 73b and the forward travel gear engagement section 23. Furthermore, a thrust washer 74 made of polytetrafluoroethylene (PTFE) is interposed between a left end of the large diameter sleeve section 73c and the sleeve section 62a of the second head 62. The thrust washer 74 is arranged so as to be capable of sliding on the third-gear/fourth-gear fork shaft 52.

With this configuration of the urging mechanism 70, the urging force of the coil spring 71 is applied to the step section 73a of the spring seat 73, and the spring seat 73, the thrust washer 74, and the second head 62 are pressed in the synchro operation direction by the urging force of the coil spring 71. Furthermore, motion of the second head 62 in the synchro operation direction is regulated by the step section 73a of the spring seat 73 making contact with the snap ring 72. That is to say, motion of the second head 62 in excess of a prescribed amount in the synchro operation direction is prevented by the snap ring 72.

Although, after the completion of synchronization, the second head 62 is pressed in the synchro operation direction by the urging force of the coil spring 71, and therefore, the sleeve 13a of the third synchromesh mechanism 13 moves in the same direction, the position of the snap ring 72 is set such that the sleeve 13a of the third synchromesh mechanism 13 and a gear piece of the sixth-gear drive gear 9a are not engaged at this time. In other words, the snap ring 72 is arranged such that, when the pressing force applied to the third head 63 by the second head 62 in the synchro operation direction is released upon the gear stick L being subjected to a shift operation to the reverse position REV, the third synchromesh mechanism 13 can return to a neutral condition.

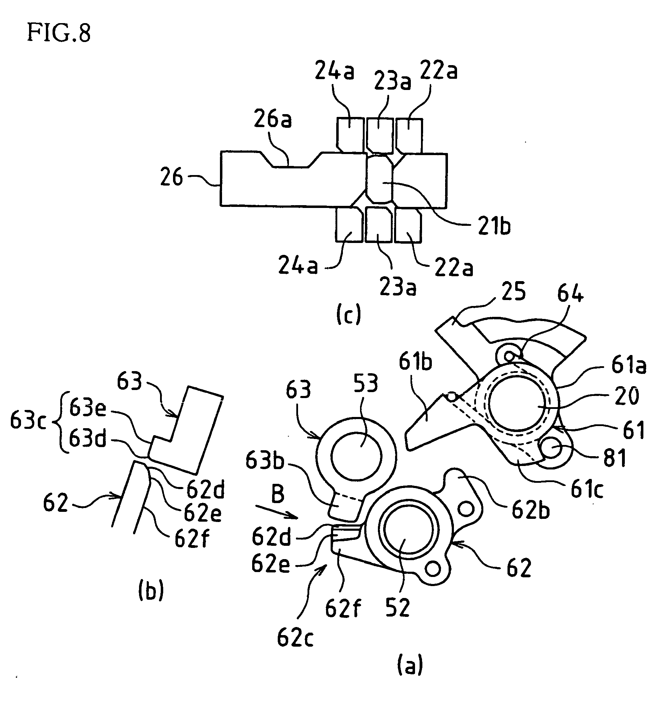

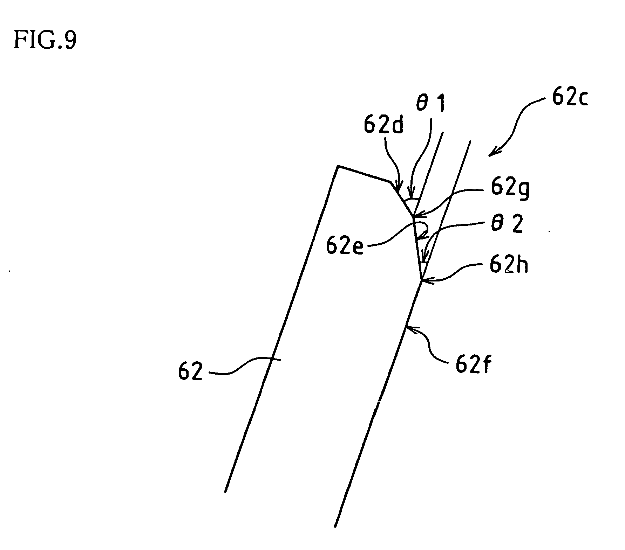

Furthermore, the pre-balk pressing section 62c of the second head 62 is formed at a position at an angular interval of 180 degrees in the circumferential direction of the second head 62 from the position whereat the pressed section 62b is formed. That is to say, the pre-balk pressing section 62c is formed at a position on a side opposite to that of the pressed section 62b. As shown in FIG. 9, a surface of the pre-balk pressing section 62c is formed having two taper surfaces 62d, 62e facing downstream in a direction of rotation of the second head 62 due to receipt of a pressing force from the pressing section 61b of the first head 61 (i.e., a clockwise direction with respect to FIG. 5) and inclined back from the plane of the page of FIG. 5, and a flat surface 62f arranged in parallel to the plane of the page of FIG. 5. FIG. 9 is a view showing the pre-balk pressing section 62c of the second head 62 as seen from the direction of the arrow B of FIG. 8(a).

The flat surface 62f is a formed as a flat plane extending in directions perpendicular to the synchro operation direction. The two taper surfaces 62d, 62e are inclined at different angles θ1, θ2 with respect to the flat surface 62f. A second taper surface 62e is an inclined surface that is continuous to the flat surface 62f, and the inclination angle θ2 thereof with respect to the flat surface 62f is set at 45 degrees or less. A first taper surface 62d is an inclined surface that is continuous to the second taper surface 62e, and the inclination angle θ1 thereof with respect to the flat surface 62f is set at greater than 45 degrees. That is to say, the inclination angle θ1 of the first taper surface 62d is larger than the inclination angle θ2 of the second taper surface 62e. Accordingly, an intersection section (or boundary section) 62g of the two taper surfaces 62d, 62e of the pre-balk pressing section 62c protrudes toward an outer side.

The first taper surface 62d regulates an operation start position of the fifth-gear/sixth-gear fork shaft 53. In consideration of manufacturing disparity and positioning error, etc., the inclination angle θ1 of the first taper surface 62d is set relatively large in order to ensure that, upon operation of the gear whine prevention device, the fifth-gear/sixth-gear fork shaft 53 is operated (i.e., moved) by the pre-balk pressing section 62c making contact with a pressed section 63c of the third head 63 pursuant to rotation of the second head 62.

The second taper surface 62e regulates an operation start position of the third synchromesh mechanism 13. The inclination angle θ2 of the second taper surface 62e is set relatively small in order to ensure that an increase in an operation load of the gear stick L by a load (i.e., a pre-balk load) produced upon operation of the gear whine prevention device is suppressed. The flat surface 62f regulates an amount of motion of the sleeve 13a of the third synchromesh mechanism 13 upon a select operation. That is to say, provision of the flat surface 62f ensures that a position of the sleeve 13a of the third synchromesh mechanism 13 in the axial direction thereof upon the completion of a select operation is surely and reliably regulated.

Furthermore, the inclination angles 81, θ2 of the two taper surfaces 62d, 62e are set such that the pre-balk load is not produced when the pressed section 63c of the third head 63 is in contact with the first taper surface 62d. That is to say, the inclination angles θ1, θ2 of the two taper surfaces 62d, 62e are set such that an operation of the third synchromesh mechanism 13 does not start at a point in time whereat the intersection section 62g makes contact with the pressed section 63c of the third head 63.

Furthermore, a coil spring 65 applying an urging force to the second head 62 is wound around the third-gear/fourth-gear fork shaft 52. An urging force in a direction opposite to that of the pressing force in the rotation direction received from the pressing section 61b of the first head 61 is applied to the second head 62 by the coil spring 65. That is to say, the second head 62 is returned to an initial position (the position shown in FIG. 5, and hereinafter referred to as the initial position of the second head 62 in the rotation direction) by the urging force of the coil spring 65 when the second head 62 is not receiving a pressing force from the pressing section 61b of the first head 61 or when the pressing force has been released.

Furthermore, the coil spring 65 applies an urging force in the reverse shift direction, or in other words, an urging force in a direction opposite to the synchro operation direction, to the second head 62. In this way, the urging force of the coil spring 65 and the urging force of the coil spring 71 of the urging mechanism 70 act on the second head 62 in opposite directions.

The urging force of the coil spring 71 is set larger than the urging force of the coil spring 65. Accordingly, in a case wherein no external force in the axial direction other than the urging forces of the coil springs 65, 71 is acting, the spring seat 73 is pressed in the synchro operation direction and moves to a position whereat contact is made with the snap ring 72, as shown in FIG. 7. Furthermore, the second head 62 is moved to a position of maximum pressing in the synchro operation direction (hereinafter referred to as the initial position of the second head 62 in the axial direction thereof).

Meanwhile, in a case wherein an external force greater than the urging force of the coil spring 65 acts in the synchro operation direction, the second head 62 is moved in the synchro operation direction against the urging force of the coil spring 65 by the external force. Furthermore, in a case wherein an external force greater than the urging force of the coil spring 71 acts in the reverse shift direction, the second head 62 is moved in the reverse shift direction against the urging force of the coil spring 71 by the external force. In such a case, the step section 73a of the spring seat 73 moves away from the snap ring 72 and the coil spring 71 is compressed.

The urging force of the coil spring 71 is set in advance to such a value that the step section 73a of the spring seat 73 is brought into contact with the snap ring 72 in a case wherein a load (i.e., the pre-balk load) is not being produced upon operation of the gear whine prevention device. Furthermore, the urging force of the coil spring 71 is set in advance to such a value that, when the pre-balk load is being produced, the pre-balk load can be received. That is to say, although the coil spring 71 is compressed upon receiving the pre-balk load and the spring seat 73 moves in the reverse shift direction, the urging force of the coil spring 71 is set such that a gap is constantly present between the small diameter sleeve section 73b of the spring seat 73 and the forward travel gear engagement section 23 at such a time.

In a case wherein the second head 62 is at the initial position in the axial direction thereof, the pressed section 62b is positioned so as to receive a pressing force from the pressing section 61b provided on the first head 61 upon rotation (i.e., rotation in a counter-clockwise direction with respect to FIG. 5) of the first head 61. That is to say, the pressing section 61b of the first head 61 and the pressed section 62b of the second head 62 are arranged so as to be mutually opposed on a virtual plane extending in directions perpendicular to the axis of the shift and select shaft 20 and of the third-gear/fourth-gear fork shaft 52.

The third head 63 is provided integrally with the fifth-gear/sixth-gear fork shaft 53. That is to say, when the fifth-gear/sixth-gear fork shaft 53 slides in an axial direction thereof (i.e., the reverse shift direction or the synchro operation direction, the third head 63 moves in the axial direction pursuant thereto. In other words, when the fifth-gear/sixth-gear fork shaft 53 slides in an axial direction thereof pursuant to a shift operation to the fifth gear or the sixth gear, the third head 63 moves in the same axial direction.

Furthermore, the third head 63 comprises a sleeve section 63a formed having a cylindrical shape so as to enclose an outer periphery of the fifth-gear/sixth-gear fork shaft 53 and a pre-balk pressed section 63b extending from a part of an outer peripheral surface of the sleeve section 63a towards an outer peripheral side. The pre-balk pressed section 63b is formed so as to oppose the pre-balk pressing section 62c formed on the second head 62. That is to say, the pre-balk pressed section 63b is formed at a position whereat sliding contact is made with the first taper surface 62d, the second taper surface 62e, or the flat surface 62f formed on the pre-balk pressing section 62c of the second head 62 when the second head 62 rotates upon receipt of a pressing force from the pressing section 61b of the first head 61.

Furthermore, the pressed section 63c is formed on the pre-balk pressed section 63b so as to oppose the first taper surface 62d, the second taper surface 62e, and the flat surface 62f of the pre-balk pressing section 62c (see FIG. 8(b)). A surface of the pressed section 63c comprises a rounded surface 63d formed having a curved shape and a flat surface 63e continuous to the rounded surface 63d. The flat surface 63e is formed as a flat plane extending in directions perpendicular to the synchro operation direction. Accordingly, in a condition wherein the first taper surface 62d, the second taper surface 62e, or the flat surface 62f of the pre-balk pressing section 62c apply a pressing force to the pressed section 63c of the pre-balk pressed section 63b of the third head 63 as a result of rotation of the second head 62, a component force of the pressing force from the second head 62 acts in a direction parallel to the axis of the third head 63, and the third head 63 slides together with the fifth-gear/sixth-gear fork shaft 53 in the axial direction (i.e., slides towards the eye in a direction perpendicular to the page of FIG. 5). It should be noted that the shape of the pressed section 63c is not limited to that explained above, and for example, an inclined surface can be provided instead of the rounded surface 63d.

### Operation of the Gear Whine Prevention Device

Hereinafter, an operation of a gear whine prevention device configured as explained above is explained. It should be noted that an operation of the gear whine prevention device when a speed of operation of the gear stick L by the driver is relatively low and an operation thereof when the speed of operation of the gear stick L by the driver is relatively high are different. An operation of the gear whine prevention device in a case wherein the operation speed of the gear stick L is relatively low is explained first, and an operation thereof in a case wherein the operation speed of the gear stick L is relatively high is explained thereafter.

### Operation when Speed of Gear Stick L is Relatively Low

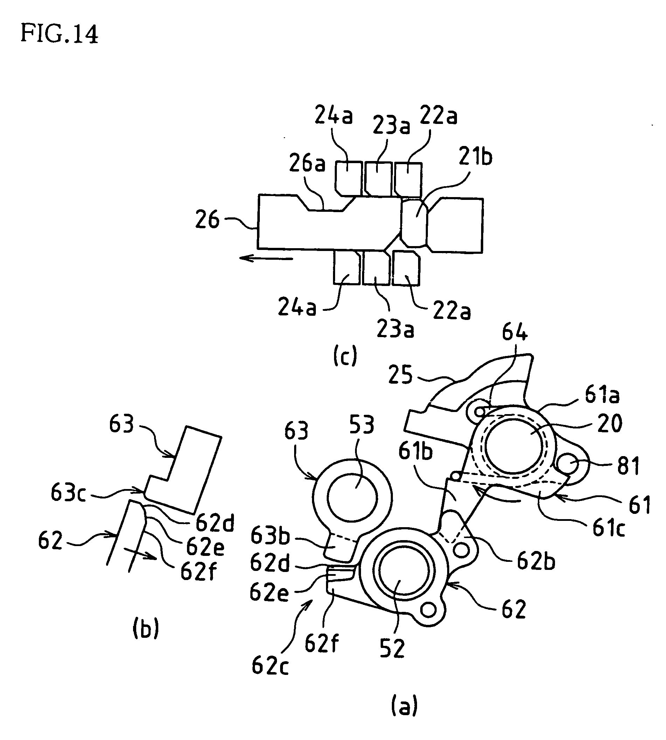

First of all, a reverse shift operation (i.e., a shift operation of the gear stick L from the third-gear/fourth-gear select position P2 to the reverse position REV) is explained by way of reference to FIGs. 8 and 10 to 13, and thereafter, a reverse release operation (i.e., an operation of the gear stick L from the reverse position REV to the third-gear/fourth-gear select position P2) is explained by way of reference to FIG. 14.

FIGs. 8(a), 10(a), 11(a), 12(a), 13(a), and 14(a) show a view of the gear whine prevention device seen from an axial direction of the shift and select shaft 20. Furthermore, FIGs. 8(b), 10(b), 11(b), 12(b), 13(b), and 14(b) show a positional relationship of the second head 62 and the third head 63 as seen in the direction of an arrow B of FIG. 8(a). In addition, FIGs. 8(c), 10(c), 11(c), 12(c), 13(c), and 14(c) show a cross-section view of the interlock plate 26 taken parallel to a motion path of the arm section 21b of the shift inner lever 21 showing a positional relationship of the arm section 21b and the heads 22a, 22a, 23a, 23a, 24a, 24a. It should be noted that a recess 26a allowing motion of the heads 24a, 24a for fifth-gear/sixth-gear upon a pre-balk operation, as explained hereinafter, (i.e., upon operation of the third synchromesh mechanism 13) is formed in the interlock plate 26.

FIGs. 8(a) to 8(c) show a condition prior to a reverse shift operation. For example, the figures show a condition wherein the gear stick L has been operated to the third-gear/fourth-gear select position P2 when performing a reverse shift operation immediately after stopping the vehicle from a forward-travel condition thereof. In this condition, as shown in FIGs. 8(a) and 8(b), the heads 61, 62, 63 do not make mutual contact and are at initial positions, mutually opposed with a prescribed interval therebetween. That is to say, in this condition, an operation force is not transmitted between the heads 61, 62, 63. Furthermore, as shown in FIG. 8(c), the arm section 21b of the shift inner lever 21 is positioned so as to be capable of engaging with the heads 23a, 23a of the forward travel gear engagement section 23 provided on the third-gear/fourth-gear fork shaft 52.

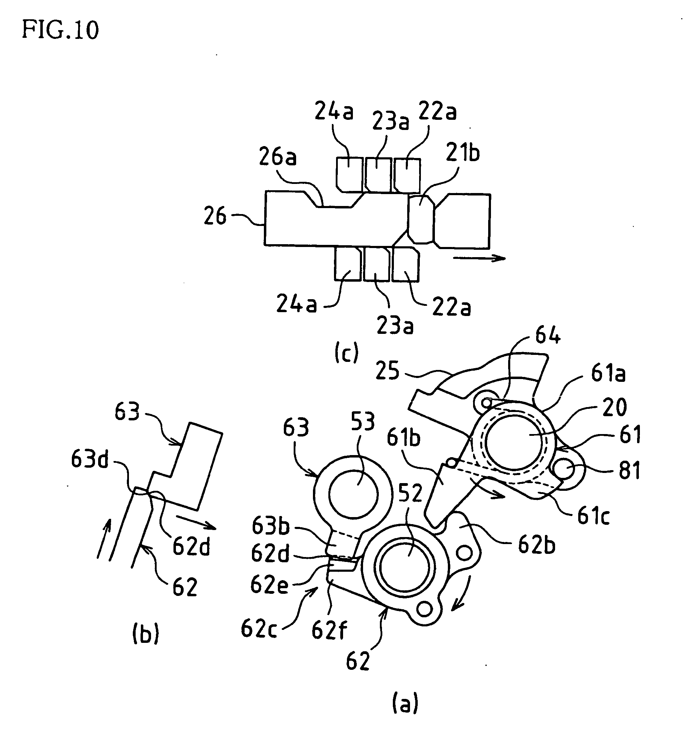

When, from this condition, a select operation of the gear stick L towards the reverse select position P4 starts, as shown in FIG. 10(a), the first head 61 rotates (as shown by an arrow in the figure) pursuant to rotation of the shift and select shaft 20, the pressing section 61b of the first head 61 comes into contact with the pressed section 62b of the second head 62, and a rotation force of the first head 61 is transmitted via the pressing section 61b and the pressed section 62b as a rotation force of the second head 62. In such a case, as an operation speed of the gear stick L is relatively low, as explained above, the rotation force of the shift and select shaft 20 is transmitted to the first head 61 with almost no deformation of the torsion spring 64. That is to say, the rotation force is transmitted from the shift and select shaft 20 to the first head 61 via the torsion spring 64 with the engagement section 61c of the first head 61 remaining in contact with the positioning pin 81.

As the amount of operation of the gear stick L towards the reverse select position P4 increases, the amount of rotation of the second head 62 also increases. FIGs. 10(a), 11(a), and 12(a) show a condition wherein the amount of rotation of the second head 62 becomes progressively larger.

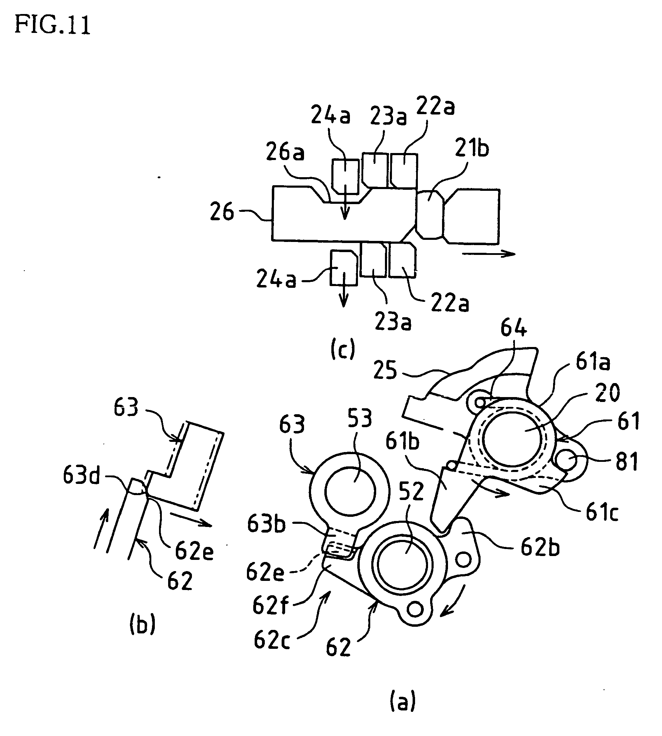

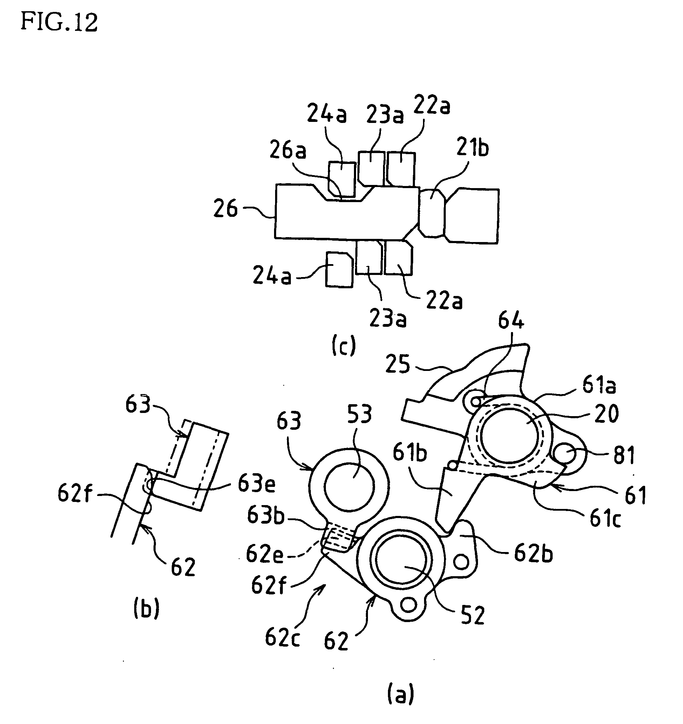

When the amount of rotation of the second head 62 becomes larger in this way, the pre-balk pressing section 62c formed on the second head 62 comes into contact with the pre-balk pressed section 63b formed on the third head 63, and the pre-balk pressing section 62c presses the pre-balk pressed section 63b. Upon receipt of the pressing force, the third head 63 moves in the synchro operation direction (i.e., towards the eye in a direction perpendicular to the page of FIG. 5) in line with an increasing amount of rotation of the second head 62. As a result thereof, the fifth-gear/sixth-gear fork shaft 53 and the shift fork 33 for fifth-gear/sixth-gear also move together with the third head 63, and an operation of the third synchromesh mechanism 13 towards the sixth-gear establishment side begins. When this pre-balk operation is performed, the sixth-gear drive gear 9a is connected (through friction contact) to the input shaft 1 via the third synchromesh mechanism 13. That is to say, the input shaft 1 is connected to the output shaft 2 via the third synchromesh mechanism 13, the sixth-gear drive gear 9a, and the sixth-gear driven gear 9b. At this time, as shown in FIGs. 11(c) and 12(c), the head 24a for fifth-gear/sixth-gear enters the recess 26a formed in the interlock plate 26, and as a result thereof, the fifth-gear/sixth-gear fork shaft 53 and the shift fork 33 for fifth-gear/sixth-gear are permitted to move.

Hereinafter, a change in the positional relationship of the pre-balk pressing section 62c of the second head 62 and the pre-balk pressed section 63b of the third head 63 pursuant to an increase in the amount of rotation of the second head 62 is explained in detail with reference to FIGs. 10 to 12.

In a process whereby the amount of rotation of the second head 62 increases, first, the first taper surface 62d of the pre-balk pressing section 62c of the second head 62 makes contact with the rounded surface 63d of the pre-balk pressed section 63b of the third head 63 (see FIG. 10(b)). Then, when the amount of rotation of the second head 62 increases, a position of contact of the rounded surface 63d on the first taper surface 62d changes towards the intersection section 62g of the two taper surfaces 62d, 62e. In such a case, the more the position of contact thereof moves towards the intersection section 62g, the more the third head 63 moves in the synchro operation direction. This embodiment is configured such that, even though the third head 63 moves in the synchro operation direction, operation of the third synchromesh mechanism 13 is not started while the first taper surface 62d and the rounded surface 63d make contact in this way. Accordingly, no load pursuant to operation of the third synchromesh mechanism 13 is produced while the first taper surface 62d and the rounded surface 63d make contact. Thus, the second head 62 is not pushed in an opposite direction to the synchro operation direction (i.e., the reverse shift direction) by such a load.

When the amount of rotation of the second head 62 further increases from that of the condition shown in FIGs. 10(a) to 10(c), the second taper surface 62e of the pre-balk pressing section 62c of the second head 62 and the rounded surface 63d of the pre-balk pressed section 63b of the third head 63 come into contact (see FIG. 11(b)). That is to say, the rounded surface 63d comes into contact with the second taper surface 62e by riding over the intersection section 62g of the two taper surfaces 62d, 62e from the condition of FIG. 10. Then, when the amount of rotation of the second head 62 increases, a position of contact of the rounded surface 63d on the second taper surface 62e changes towards an intersection section 62h of the second taper surface 62e and the flat surface 62f. In such a case, the more the position of contact thereof moves towards the intersection section 62h, the more the third head 63 moves in the synchro operation direction. Operation of the third synchromesh mechanism 13 is started as a result of this motion of the third head 63.

This embodiment is, therefore, configured such that operation of the third synchromesh mechanism 13 starts while the second taper surface 62e and the rounded surface 63d are in mutual contact. When the operation of the third synchromesh mechanism 13 starts, a load (i.e., the pre-balk load) is produced pursuant to that operation. The pre-balk load is produced from the start of operation of the third synchromesh mechanism 13 until the completion of synchronization. Thus, as the pre-balk load is transmitted to the second head 62 via the third head 63, provided on the fifth-gear/sixth-gear fork shaft 53, the second head 62 is pushed in an opposite direction to the synchro operation direction (i.e., the reverse shift direction). Consequently, the second head 62 moves in the reverse shift direction until reaching a position whereat the pre-balk load applied thereto and the urging force of the coil spring 71 are balanced. That is to say, the coil spring 71 is compressed by the pre-balk load and the second head 62 moves in the reverse shift direction from the initial position in the axial direction thereof.

When the amount of rotation of the second head 62 further increases from that of the condition shown in FIG. 11, the flat surface 62f of the pre-balk pressing section 62c of the second head 62 and the flat surface 63e of the pre-balk pressed section 63b of the third head 63 come into contact (see FIG. 12(b)). As the flat surfaces 62f, 63e are in mutual contact in this condition, the pre-balk pressed section 63b is not pressed by the pre-balk pressing section 62c as a result of rotation of the second head 62. Furthermore, as the third synchromesh mechanism 13 is operating in this condition, the pre-balk load is produced until the completion of synchronization. Accordingly, the pre-balk load is transmitted to the second head 62, and the second head 62 moves in the reverse shift direction. Meanwhile, when synchronization is completed, the pre-balk load stops acting on the second head 62, and consequently, the second head 62 is pressed in the synchro operation direction by the urging force of the coil spring 71 and moves in the synchro operation direction to the initial position in the axial direction thereof, as regulated by the snap ring 72. As a result thereof, the third head 63 is pressed by the second head 62 and moves in the synchro operation direction. That is to say, after the completion of synchronization, the second head 62, having been returned in the reverse shift direction by the pre-balk load, is again moved in the synchro operation direction by the urging force of the coil spring 71.

When a gear-change operation to the reverse gear is performed, the vehicle is in a stopped condition and the output shaft 2 is also stopped. For this reason, as the input shaft 1 is connected to the output shaft 2 as a result of operation of the above-explained third synchromesh mechanism 13 towards the sixth-gear establishment side, even in a situation wherein the input shaft 1 is performing inertial rotation, the rotation of the input shaft is forcibly either stopped or decelerated (i.e., matched to the rotation of the output shaft 2). Accordingly, when the gear stick L is subsequently subjected to a shift operation to the reverse position REV, the reverse drive gear 10a arranged so as to rotate in unison with the input shaft 1 can, in a stopped or decelerated condition, engage with the reverse idler gear 10c, and therefore, engagement thereof occurs smoothly and the occurrence of gear whine can be prevented.

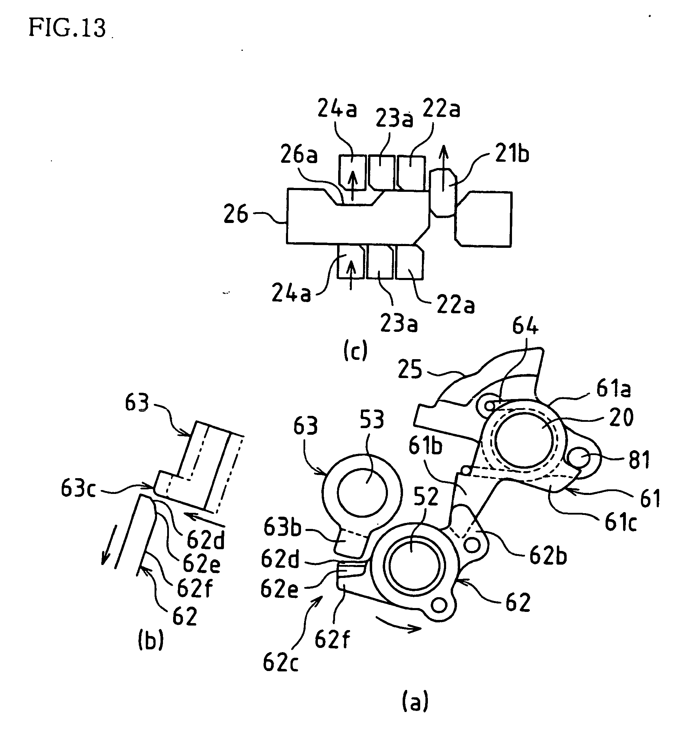

Furthermore, when the gear stick L is subjected to a shift operation to the reverse position REV in this way, the shift and select shaft 20 slides in the reverse shift direction. In specific terms, the shift and select shaft 20 slides away from the eye in a direction perpendicular to the page of FIGs. 5 and 12. As a result thereof, the first head 61 also moves in the same direction, and the pressing section 61b formed on the first head 61 withdraws in an axial direction from the pressed section 62b formed on the second head 62. That is to say, the pressing force being applied to the second head 62 by the pressing section 61b of the first head 61 is released, and as shown in FIG. 13, the second head 62 is returned to the initial position in the rotation direction (i.e., the position shown in FIG. 5) by the urging force of the coil spring 65 (see FIG. 5). As a result of the second head 62 being returned to the initial position in the rotation direction in this way, the pressing force being applied to the third head 63 in the synchro operation direction is also released, the third head 63 also returns to the initial position, and the connection between the input shaft 1 and the output shaft 2 as a result of operation of the third synchromesh mechanism 13 is released. That is to say, the third synchromesh mechanism 13 is set to the neutral condition, and thereafter, the gear-change operation to the reverse gear is completed pursuant to continuation of the shift operation of the gear stick L towards the reverse position REV

Next, a reverse release operation (i.e., an operation of the gear stick L from the reverse position REV to the third-gear/fourth-gear select position P2) is explained. When the gear stick L is operated from the reverse position REV to the reverse select position P4 as explained above, the shift and select shaft 20 moves in a direction opposite to the reverse shift direction. In specific terms, the shift and select shaft 20 slides towards the eye in a direction perpendicular to the page of FIGs. 5 and 14. Consequently, the first head 61 also moves towards the initial position in the axial direction thereof. As the second head 62 has already returned to the initial position in the rotation direction in this condition as explained above, the first head 61 makes contact with the second head 62 in an axial direction and moves the second head 62 in an axial direction (i.e., towards the eye in a direction perpendicular to the page of FIGs. 5 and 14) against the urging force in the axial direction of the coil spring 65. In specific terms, the pressing section 61b of the first head 61 presses the pressed section 62b of the second head 62 in a direction parallel to the axis thereof, and as a result thereof, moves the second head 62 in the axial direction. In this case, although the first head 61 applies a pressing force to the second head 62, the pressing force acts in the axial direction, and therefore, the second head 62 remains in a neutral condition thereof without rotating towards the third head 63 and without causing the third synchromesh mechanism 13 to operate.

When the gear stick L is operated towards the third-gear/fourth-gear select position P2 after operation thereof to the reverse select position P4 (in reality, the gear stick L is returned to the third-gear/fourth-gear select position P2 by a spring connected to the gear stick L and applying an urging force acting towards the third-gear/fourth-gear select position P2), the shift and select shaft 20 rotates (see an arrow in FIG. 14(a)), and as a result thereof, the first head 61 is also rotated towards the initial position thereof. When the gear stick L reaches the third-gear/fourth-gear select position P2, the shift and select shaft 20 and the first head 61 are returned to the initial positions shown in FIGs. 5 and 8. Furthermore, the pressing force being applied in an axial direction to the second head 62 by the first head 61 is also released, and the second head 62 is returned to an initial position in the axial direction thereof by the urging force in the axial direction of the coil spring (or urging means) 65.

### Operation when Speed of Gear Stick L is Relatively High

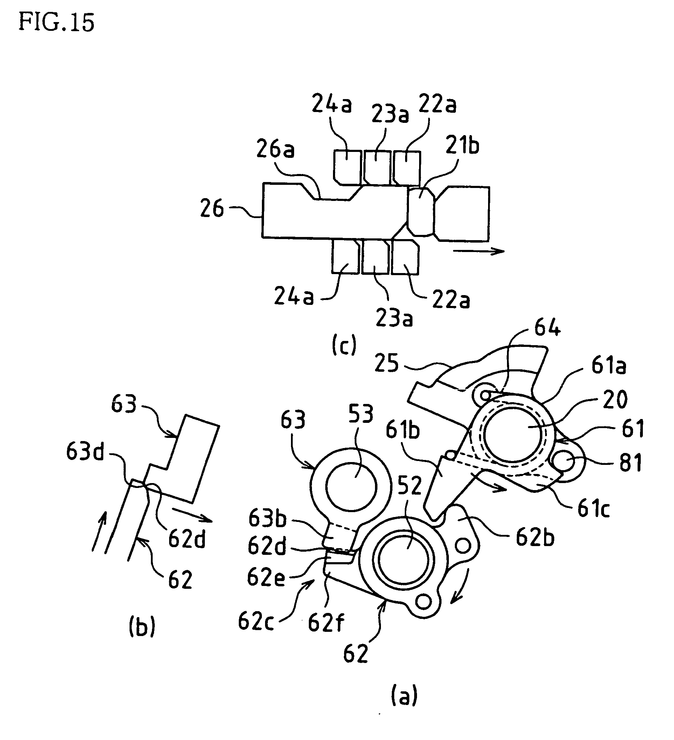

Next, an operation of the gear whine prevention device in a case wherein the operation speed of gear stick L is relatively fast is explained by way of reference to FIGs. 15 to 18. FIGs. 15(a), 16(a), 17(a) and 18(a) also show a view of the gear whine prevention device seen from an axial direction of the shift and select shaft 20. Furthermore, FIGs. 15(b), 16(b), 17(b) and 18(b) show a positional relationship of the second head 62 and the third head 63 as seen in the direction of the arrow B of FIG. 8(a). In addition, FIGs. 15(c), 16(c), 17(c) and 18(c) show a cross-section view of the interlock plate 26 taken parallel to a motion path of the arm section 21b of the shift inner lever 21 showing a positional relationship of the arm section 21b and the heads 22a, 22a, 23a, 23a, 24a, 24a.

When, from a condition prior to a reverse shift operation as shown in FIGs. 8(a) to 8(c), a relatively fast select operation of the gear stick L towards the reverse select position P4 starts, as shown in FIG. 15(a), the first head 61 rotates (as shown by an arrow in the figure) pursuant to rotation of the shift and select shaft 20, the pressing section 61b of the first head 61 comes into contact with the pressed section 62b of the second head 62, and a rotation force of the first head 61 is transmitted via the pressing section 61b and the pressed section 62b as a rotation force of the second head 62. As the amount of operation of the gear stick L towards the reverse select position P4 increases, the amount of rotation of the second head 62 also increases.

When the pressing section 61b has made contact with the pressed section 62b of the second head 62 in this way, an operation force (or operation load) required to perform the select operation must be large. Furthermore, when the sleeve 13a of the third synchromesh mechanism 13 has moved to the pre-balk position as a result of motion of the third head 63 and the fifth-gear/sixth-gear fork shaft 53 in an axial direction thereof pursuant to rotation of the second head 62, it becomes difficult to move the sleeve 13a further than the pre-balk position until phases are matched due to the completion of synchronization by the third synchromesh mechanism 13. In this situation, further operation of the gear stick L in the select direction was not possible in certain cases with conventional technologies.

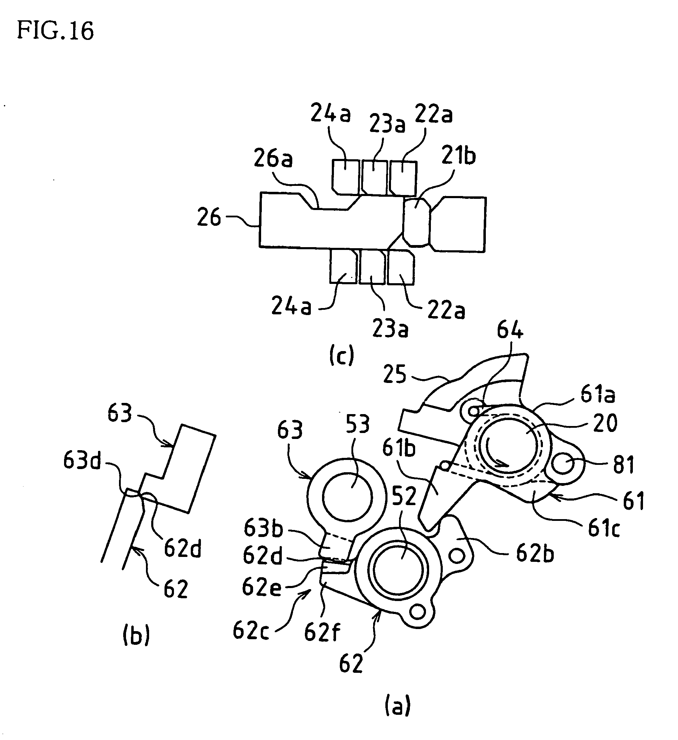

In this embodiment, the torsion spring 64 is interposed between the shift and select shaft 20 and the first head 61, being mutually adjacent component members in a select operation force transmission direction in this situation. Accordingly, the select operation force can be transmitted to the first head 61 while absorbing an amount of rotation of the shift and select shaft 20 corresponding to an amount of operation of the gear stick L by the driver (i.e., while reducing an amount of transmitted motion) as a result of elastic deformation of the torsion spring 64. That is to say, in a situation wherein, as explained above, the sleeve 13a cannot be moved further than the pre-balk position until phases are matched due to the completion of synchronization by the third synchromesh mechanism 13, rotation of the shift and select shaft 20 is possible due to elastic deformation of the torsion spring 64 in a circumferential direction, even though rotation of the first head 61 and the second head 62 and motion of the third head 63 and the fifth-gear/sixth-gear fork shaft 53 in an axial direction are not possible. FIG. 16 shows a condition wherein the gear stick L has been subjected to a further select operation from the condition of FIG. 15 and only the shift and select shaft 20 and the reverse lever 25 have rotated (i.e., rotated in a counter-clockwise direction with respect to FIG. 16) without any change in the positions of the first head 61, the second head 62, and the third head 63. In this condition, furthermore, a difference in the amounts of rotation thereof is absorbed by elastic deformation of the torsion spring 64 in the circumferential direction.

Even in a condition wherein the sleeve 13a of the third synchromesh mechanism 13 cannot move (i.e., a condition wherein the first head 61 and the second head 62 cannot rotate), therefore, the shift and select shaft 20 is capable of rotation due to the elastic deformation of the torsion spring 64 in the circumferential direction in this way. That is to say, a select operation of the gear stick L (i.e., an operation in the direction shown by the arrow X in FIG. 2) can be performed in such a condition. Furthermore, the required operation load during the period wherein the torsion spring 64 is elastically deformed can be a relatively small load sufficient to elastically deform the torsion spring 64. Accordingly, the operation force (i.e., operation load) required to perform a select operation can be reduced and favorable operation comfort can be maintained upon selection of the reverse gear.

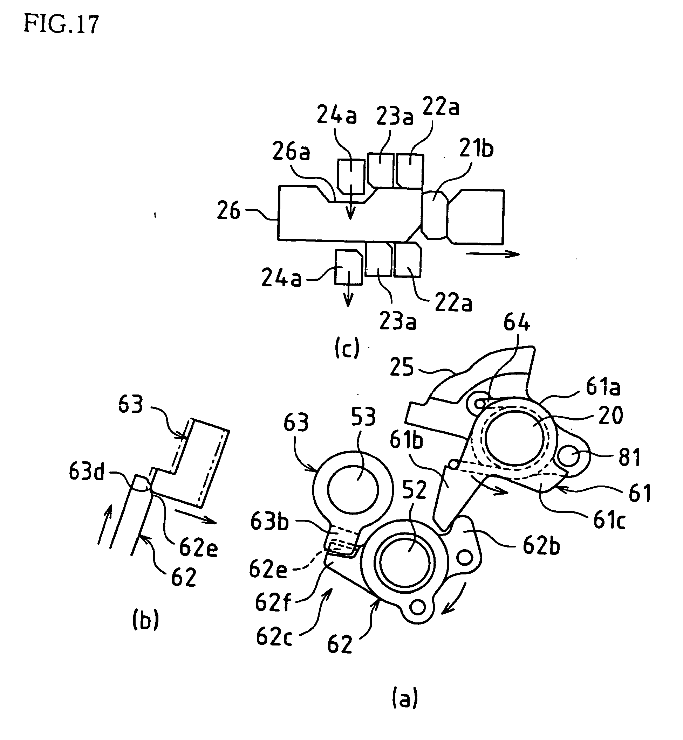

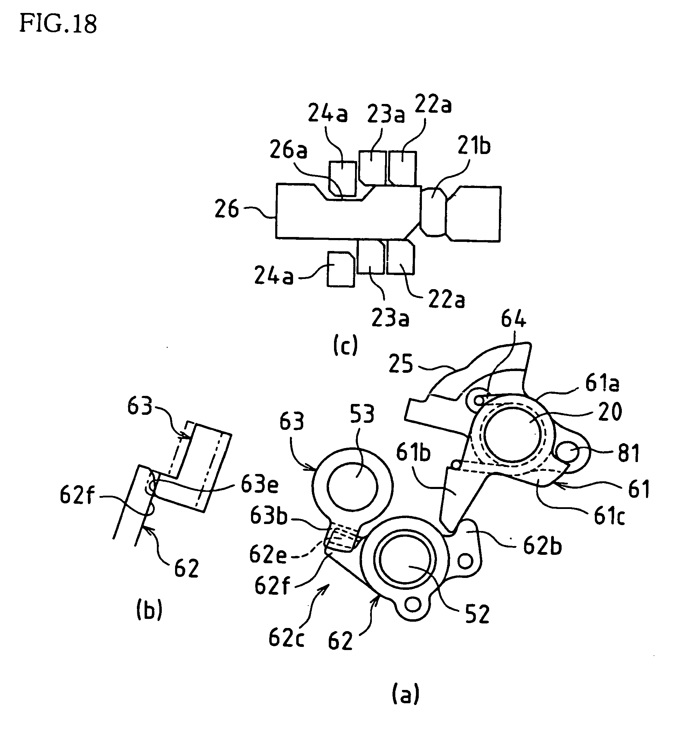

Thus, after the torsion spring 64 has been elastically deformed and the sleeve 13a of the third synchromesh mechanism 13 becomes capable of moving (i.e., after synchronization by the third synchromesh mechanism 13 has been completed), the elastic force of the torsion spring 64 changes to a select operation force and acts on the first head 61. Furthermore, as shown in FIGs. 17 and 18, the first head 61 is rotated by the elastic force of the torsion spring 64 (i.e., rotated in a counterclockwise direction with respect to the figures), the rotation force thereof is transmitted in sequence to the second head 62 and the third head 63, as in the same way as explained above, gear whine is prevented from occurring by the synchronization operation of the third synchromesh mechanism 13.

As explained above, the torsion spring 64 is provided between the shift and select shaft 20 and the first head 61, being mutually adjacent component members in a select operation force transmission direction, in this embodiment. Accordingly, when a speed of the select operation of the driver is, for example, high upon selection of the reverse gear, a required operation load during the period wherein the torsion spring 64 is elastically deformed can be a relatively small load sufficient to elastically deform the torsion spring 64, and the operation force (i.e., operation load) required to perform the select operation can be reduced. Accordingly, favorable operation comfort can be maintained upon selection of the reverse gear.

The operation force (i.e., the operation load) required to perform the select operation has tended to become large particularly in conventional configurations wherein sufficient performance of a gear whine prevention function is ensured by securing a large amount of sliding of the fifth-gear/sixth-gear fork shaft 53 (i.e., the pre-balk fork shaft) in order to realize sure and reliable synchronization by the third synchromesh mechanism 13. In the configuration of this embodiment, however, the operation force can be reduced as explained above, and therefore, improvement of the reliability of the gear whine prevention function and better operation comfort upon selection of the reverse gear can be simultaneously achieved.

With this embodiment, furthermore, when a rotation force of the shift and select shaft 20 is transmitted from the first head 61 to the third head 63 via the second head 62 and motive energy is transmitted from the second head 62 to the third head 63, the rotation force is converted into a motion force oriented parallel to an axis (i.e., in the synchro operation direction) so that the third synchromesh mechanism 13 is operated to the sixth-gear establishment side. Therefore, although the pre-balk load produced upon operation of the gear whine prevention device acts on the second head 62 from the fifth-gear/sixth-gear fork shaft 53 in a direction parallel to an axis (i.e., the reverse shift direction), the shift and select shaft 20 applies an urging force in the rotation direction to the second head 62, and therefore, the pre-balk load does not act directly on the shift and select shaft 20. In such a case, as the coil spring 71 of the urging mechanism 70 is arranged at a front side of the second head 62 in the reverse shift direction (or a rear side thereof in the synchro operation direction), the pre-balk load can be received through compression of the coil spring 71. Furthermore, an amount of motion of the fifth-gear/sixth-gear fork shaft 53 required in order to activate the gear whine prevention function (i.e., an amount of motion required to operate the third synchromesh mechanism 13) can be large, and the reliability of the gear whine prevention function can be improved.

If the configuration did not comprise the coil spring 71 and received the pre-balk load simply using a stopper, etc. secured to the third-gear/fourth-gear fork shaft 52, the following would be a cause for concern. Specifically, when operation of the third synchromesh mechanism 13 is started, there is a possibility that motion of the second head 62 parallel to the axis thereof will stop at the operation start position thereof and that the select operation of the gear stick L will stop at an intermediate point until the completion of synchronization, adversely affecting the operation comfort of the gear stick L. In this embodiment, however, as the second head 62 is moved in the reverse shift direction when the pre-balk load is produced, the pre-balk load is received by the coil spring 71, provided on the third-gear/fourth-gear fork shaft 52. Thus, as motion of the second head 62 parallel to the axis does not stop at the operation start point, occurrence of these problems can be prevented and favorable operation comfort of the gear stick L can be maintained.

Furthermore, in a configuration wherein a ball and a spring pushing an interlock plate against the shift and select shaft 20 are used to receive the pre-balk load, the following would be a cause for concern. Specifically, if the urging force of the spring acts in the same way upon a shift-out operation for releasing reverse (i.e., an operation of the gear stick L from the reverse position REV to the reverse select position P4) as upon a reverse shift operation, there is a possibility that the operation load of the gear stick L will increase at such a time. That is to say, as components of the gear whine prevention mechanism such as the ball and spring, etc. operate in the same way upon both a shift-out operation for releasing reverse and a reverse shift operation, there is a possibility that the operation load of the gear stick L upon a shift-out operation for releasing reverse will become large, adversely affecting the operation comfort of the gear stick L. In contrast, with this embodiment, the urging force of the coil spring 71 of the urging mechanism 70 acts upon the second head 62 during a reverse shift operation, but not during a shift-out operation for releasing reverse. As explained above, upon a shift-out operation for releasing reverse, the second head 62 moves in the synchro operation direction from the initial position in the axial direction thereof against an urging force in the axial direction of the coil spring 65. As the urging force of the coil spring 71 does not act on the second head 62 at this time, the operating load of the gear stick L can be suppressed, and favorable operation comfort of the gear stick L can be maintained. In addition, the maximum operation load and the load characteristic of the gear stick L can be easily changed by appropriately setting the urging force of the coil spring 71, allowing the operation comfort of the gear stick L to be improved.

Furthermore, in a configuration wherein a ball and a spring pushing an interlock plate against the shift and select shaft 20 are used to receive the pre-balk load, the following would also be a cause for concern. Specifically, if positioning of the shift and select shaft 20 in the rotation direction and the axial direction is performed using only the interlock plate and the ball, the precision of this positioning can worsen, and there is a possibility that disparity can occur in the amount of motion of the pre-balk fork shaft (i.e., the amount of motion required to operate the synchronizer). Accordingly, there is a possibility that the amount of motion of the pre-balk fork shaft can become excessively large, and therefore, that the sleeve and gear piece (or speed-change gear) of the synchronizer can engage upon operation of the gear whine prevention device.

In this embodiment, however, as the snap ring 72 is provided to regulate the amount of motion in the synchro operation direction of the second head 62 by the coil spring 71, the amount of motion required to operate the third synchromesh mechanism 13 does not become excessively large. Furthermore, as the third head 63 is pressed finally by the flat surface 62f of the pre-balk pressing section 62c of the second head 62 during a select operation as explained above, the amount of motion required thereof for operating the third synchromesh mechanism 13 can be accurately regulated. Consequently, engagement of the sleeve 13a of the third synchromesh mechanism 13 and the gear piece of the sixth-gear drive gear 9a can be surely and reliably prevented when the gear whine prevention device operates, and the reliability of the gear whine prevention device can be improved.

Furthermore as the pre-balk pressing section 62c of the second head 62 is provided with two taper surfaces 62d, 62e, the following operational advantage can also be achieved. Specifically, as the inclination angle θ1 of the first taper surface 62d with respect to the flat surface 62f is set relatively large, the first taper surface 62d presses surely and reliability the pressed section 63c of the third head 63 upon rotation of the second head 62, even in a case wherein manufacturing disparity or positioning error, etc. has occurred. It should be noted that, as a pre-balk load is not produced while the first taper surface 62d and the pressed section 63c are in contact as explained above, even when the inclination angle θ1 of the first taper surface 62d is relatively larger, an effect on the operation load of the gear stick L can be suppressed.

As the inclination angle θ2 of the second taper surface 62e with respect to the flat surface 62f is set relatively small, it is possible to suppress an increase in the operation load of the gear stick L. As explained above, operation of the third synchromesh mechanism 13 starts and the pre-balk load is produced while the second taper surface 62e and the rounded surface 63d are in contact. Accordingly, in a case wherein the second taper surface 62e is not provided (i.e., in a case wherein only the first taper surface 62d is provided), the pre-balk load acts to a large degree in the rotation direction of the second head 62, and the operation load of the gear stick L increases. As the inclination angle 82 of the second taper surface 62e is set smaller than the inclination angle θ1 of the first taper surface 62d in this embodiment, a component of the pre-balk load acting on the second head 62 in the rotation direction can be suppressed and the operation load of the gear stick L can be reduced.

Furthermore, as the thrust washer 74 made of polytetrafluoroethylene (PTFE), having a low coefficient of friction, is provided adjacent to the second head 62 at a rear side thereof in the synchro operation direction, or in other words, at a front side thereof in a direction of operation of the pre-balk load on the second head 62, sliding resistance upon a rotation operation of the second head 62 is reduced. As a result thereof, rotation of the second head 62 proceeds smoothly and the operation load of the gear stick L can be further reduced, even in a case wherein the pre-balk load is acting on the second head 62. It should be noted that any material having a low coefficient of friction can be used instead of polytetrafluoroethylene (PTFE). Furthermore, a thrust bearing such as a thrust needle bearing, etc. can be provided instead of the thrust washer 74 as a member having a low coefficient of friction.

### Other Embodiments

In the above-explained embodiment, a case of application of the present invention to a manual transmission mounted in a front-engine, front-drive (FF) vehicle and having a synchronous-engagement configuration, six forward travel gears, and one reverse gear is explained. The present invention is not limited thereto, and application to a manual transmission mounted in a vehicle of a different format, such as a front-engine, rear-drive (FR) vehicle, etc., is possible. Furthermore, application to a transmission with a different number of gears (for example, five forward travel gears and one reverse gear) is also possible. In addition, the present invention can also be applied to an automatic manual transmission (AMT) provided with an actuator interlocked with a gear-selection operation of the driver and performing a gear-change operation using the actuator.

Furthermore, although a gear whine prevention device configured between the shift and select shaft 20, the third-gear/fourth-gear fork shaft 52, and the fifth-gear/sixth-gear fork shaft 53 was explained above, the gear whine prevention device can be configured so as to use different fork shafts (for example, the first-gear/second-gear fork shaft 51 and the third-gear/fourth-gear fork shaft 52, etc.). In addition, the gear whine prevention device can be configured so as to use all fork shafts 51, 52, 53. In such a case, a head as explained above is also provided on the first-gear/second-gear fork shaft 51, the rotation force of the shift and select shaft 20 is transmitted in sequence as a rotation force of the first head 61, the head provided on the first-gear/second-gear fork shaft 51, and the second head 62, and the rotation force of the second head 62 is transmitted to the third head 63 as a motion force in an axial direction. In other words, the intermediate head member of the present invention comprises a plurality of heads.

In the above embodiment, furthermore, the torsion spring 64 is provided between the shift and select shaft 20 and the first head 61 as an operation amount absorbing member. However, the present invention is not limited thereto, and an operation amount absorbing member can be provided between any component members constituting the transmission path for the select operation force (i.e., the shift and select shaft 20, the first head 61, the second head 62, the third head 63, the fifth-gear/sixth-gear fork shaft 53, and the third synchromesh mechanism 13). In addition, the number of locations whereat an operation amount absorbing member is provided is not limited to one, and operation amount absorbing members can be provided at a plurality of locations.

The present invention may be embodied in various other forms without departing from the essential characteristics thereof. The embodiments disclosed in this application are to be considered in all respects as illustrative and not limiting. The scope of the invention is indicated by the appended claims rather than by the foregoing description, and all modifications or changes that come within the meaning and range of equivalency of the claims are intended to be embraced therein.

## Claims

1. A manual transmission comprising:
a shift and select shaft (20) operable to perform a select operation in a select direction and a shift operation in a shift direction upon a gear-change operation,
a forward travel gear fork shaft (53) connected to the shift and select shaft as a result of a select operation of the shift and select shaft (20) to a prescribed forward travel gear select position upon selection of a forward travel gear and operable to execute a gear-change operation to the prescribed forward travel gear while being operable to simultaneously operate a synchronizer (13) by moving in an axial direction pursuant to a shift operation of the shift and select shaft (20), and
a reverse gear shift member (28) whereto the shift and select shaft (20) is operable to be connected as a result of a select operation of the shift and select shaft (20) to a reverse gear select position upon selection of a reverse gear and the reverse gear shift member (28) being operable to execute a gear-change operation to the reverse gear pursuant to a shift operation of the shift and select shaft (20), and a gear whine prevention device comprising:
a plurality of select operation force transmission members operable to transmit a select operation force from the shift and select shaft (20) to the synchronizer (13) upon a select operation of the shift and select shaft (20) towards the reverse gear select position so as to operate the synchronizer (13) during a period wherein the select operation is being performed,
an operation amount absorbing member (64) provided between adjacent component members in a select operation force transmission direction of a select operation force transmission path comprising the shift and select shaft (20), the plurality of select operation force transmission members, and the synchronizer (13) and capable both of absorbing an amount of motion of a component member disposed upstream thereof in the select operation force transmission direction through elastic deformation and of transmitting the elastic force to a downstream component member (61) disposed downstream thereof in the select operation force transmission direction, as a select operation force,
**characterised in that**
the downstream component member (61) is externally fitted to the shift and select shift (20) so as to be capable of rotating freely relative thereto,
the downstream component member (61) comprises a sleeve section (61a) formed having a cylindrical shape so as to enclose an outer periphery of the shift and select shaft (20) and an engagement section (61c) extending from a part of an outer peripheral surface of the sleeve section (61a) towards an outer peripheral side,
the operation amount absorbing member (64) is adapted to apply an urging force to the downstream component member (61), and
the engagement section (6 1 c) is adapted to regulate a rotation position of the downstream component member (61) by making contact with a positioning pin (81) provided so as to rotate in unison with the shift and select shaft (20).

2. The manual transmission of claim 1 wherein the downstream component member (61) is: a first head member (61) provided so as to be capable of transmitting a rotation force of the shift and select shaft (20) upon a select operation of the shift and select shaft (20) towards the reverse gear select position; and wherein the select operation force transmission members further comprise
at least one intermediate head member (62) rotating as a result of receiving a rotation force of the first head member (61); and
a pre-balk head member (63) arranged on the forward travel gear fork shaft (53) and operating the synchronizer (13) during a period wherein the shift and select shaft (20) is being subjected to a select operation towards the reverse gear by moving the forward travel gear fork shaft (53) in a direction parallel to an axis thereof as a result of receiving a rotation force of the intermediate head member (62).

3. The manual transmission of claim 2, wherein:
the first head member (61) is fitted on an outer periphery of the shift and select shaft (20) so as to be capable of rotating relative thereto, and
the operation amount absorbing member (64) comprises a coil spring extending between the first head member (61) and the shift and select shaft (20) and is configured so as both to absorb, through elastic deformation thereof in a circumferential direction, an amount of rotation of the shift and select shaft (20) upon receipt thereby of the select operation force and to rotate the first head member (61) by transmitting the select operation force thereto.

4. The manual transmission of claim 2 or claim 3, comprising:
a stopper means (70) that, upon motion of the forward travel gear fork shaft (53) in a direction parallel to an axis thereof as a result of application of the rotation force of the intermediate head member (62) to the pre-balk head member (63), restricts motion of the intermediate head member (62) in a direction parallel to an axis thereof, being a direction of operation of a reaction force from the pre-balk head member (63), such that the intermediate head member (62) receives the reaction force.

5. The manual transmission of any one of claims 2 to 4, wherein:
upon the shift and select shaft (20) being subjected to a shift operation to the reverse gear shift position during selection of the reverse gear, the first head member (61) also moves in the axial direction pursuant to motion of the shift and select shaft (20) in the axial direction thereof, and as a result thereof, the first head member (61) withdraws from the intermediate head member (62) in the axial direction, causing the application of rotation force to the intermediate head member (62) to be released, and the urging force being applied by the intermediate head member (62) to the pre-balk head member (63) and moving the forward travel gear fork shaft (53) in a direction parallel to the axial direction thereof is also released.

6. The manual transmission of any one of claims 2 to 5, wherein:
the intermediate head member (62) is configured so as to be capable of moving freely in a direction parallel to the axis of the shift and select shaft (20) and supported so as to be capable of, as a result of receiving a pressing force from the first head member (61) in a direction parallel to the axis upon return of the shift and select shaft (20) to a neutral position from the shift position for the reverse gear, performing a withdrawal operation in a direction parallel to the axis.

7. The manual transmission of claim 6, comprising:
an urging means (65) applying to the intermediate head member (62) an urging force towards a rotation direction initial position whereat the rotation force from the first head member (61) is not received and an urging force towards an axial direction initial position whereat a pressing force from the first head member (61) in a direction parallel to the axis thereof is not received.

## Patentansprüche

1. Handschaltgetriebe mit:
einer Schalt- und Wählwelle (20), die betätigbar ist, um eine Wahlbetätigung in einer Wählrichtung und eine Schaltbetätigung in eine Schaltrichtung bei einem Gangwechselvorgang durchzuführen,
einer Vorwärtsfahrtgetriebegabelwelle (53), die mit der Schalt- und Wählwelle infolge eines Wahlvorgangs der Schalt- und Wählwelle (20) in eine vorgeschriebene Vorwärtsfahrtgangwahlposition bei der Wahl eines Vorwärtsfahrtgangs verbunden ist und betätigbar ist, um einen Gangwechselvorgang zu dem vorgeschriebenen Vorwärtsfahrtgang auszuführen, während sie betätigbar ist, um gleichzeitig eine Synchronisierung (13) zu betätigen, indem sie in eine axiale Richtung entsprechend einer Schaltbetätigung der Schalt- und Wählwelle (20) verschoben wird, und
einem Rückwärtsgangschaltelement (28), zu dem die Schalt- und Wählwelle (20) betätigbar ist, um infolge einer Wahlbetätigung der Schalt- und Wählwelle (20) in eine Rückwärtsgangwahlposition bei der Wahl eines Rückwärtsgangs verbunden zu sein, und wobei das Rückwärtsgangschaltelement (28) betätigbar ist, um einen Gangwechselvorgang in den Rückwärtsgang entsprechend einer Schaltbetätigung der Schalt- und Wählwelle (20) auszuführen, und einer Zahnradheulenverhinderungseinrichtung mit:
einer Vielzahl Wahlbetätigungskraftübertragungselementen, die betätigbar sind, um eine Wahlbetätigungskraft von der Schalt- und Wählwelle (20) bei einer Wahlbetätigung der Schalt- und Wählwelle (20) in Richtung der Rückwärtsgangwahlposition auf die Synchronisierung (13) zu übertragen, um so die Synchronisierung (13) während eines Zeitraums zu betätigen, in dem die Wahlbetätigung durchgeführt wird,
einem Betätigungsbetragaufnahmeelement (64), das zwischen benachbarten Baugruppenelementen in Wahlbetätigungskraftübertragungsrichtung eines Wahlbetätigungskraftübertragungspfads vorgesehen ist, der die Schalt- und Wählwelle (20), die Vielzahl Wahlbetätigungskraftübertragungselemente und die Synchronisierung (13) aufweist, und das in der Lage ist, sowohl einen Bewegungsbetrag eines in der Wahlbetätigungskraftübertragungsrichtung von diesem stromaufwärtigen Baugruppenelement durch elastische Deformation aufzunehmen, als auch die elastische Kraft zu einem stromabwärtigen Baugruppenelement (61), das in Wahlbetätigungskraftübertragungsrichtung stromabwärtsseitig angeordnet ist, als eine Wahlbetätigungskraft zu übertragen,
**dadurch gekennzeichnet, dass**
das stromabwärtige Baugruppenelement (61) von außen an der Schalt- und Wählwelle (20) angebracht ist, um relativ dazu frei drehen zu können,
das stromabwärtige Baugruppenelement (61) einen Hülsenabschnitt (61a), der in einer zylindrischen Form ausgebildet ist, um einen Außenumfang der Schalt- und Wählwelle (20) zu umfassen, und einen Eingriffsabschnitt (61c) aufweist, der sich von einem Teil einer Außenumfangsfläche des Hülsenabschnitts (61a) in Richtung einer Außenumfangsseite erstreckt,
das Betätigungsbetragaufnahmeelement (64) angepasst ist, um eine drängende Kraft auf das stromabwärtige Baugruppenelement (61) auszuüben, und
der Eingriffsabschnitt (61c) angepasst ist, um eine Drehstellung des stromabwärtigen Baugruppenelements (61) durch Berühren eines Positionierungsstifts (81) zu begrenzen, der vorgesehen ist, um in Einklang mit der Schalt- und Wählwelle (20) zu drehen.

2. Handschaltgetriebe nach Anspruch 1, wobei das stromabwärtige Baugruppenelement (61) ein erstes Kopfelement (61) ist, das vorgesehen ist, um eine Drehkraft der Schalt- und Wählwelle (20) bei einer Wahlbetätigung der Schalt- und Wählwelle (20) in Richtung der Rückwärtsgangwahlposition übertragen zu können; und wobei die Wahlbetätigungskraftübertragungselemente ferner aufweisen
mindestens ein zwischenliegendes Kopfelement (62), das infolge einer von dem ersten Kopfelement (61) empfangenen Drehkraft dreht; und
ein Vorhemmkopfelement (63), das an der Vorwärtsfahrtgetriebegabelwelle (53) angeordnet ist und die Synchronisierung (13) während eines Zeitraums betätigt, in dem die Schalt- und Wählwelle (20) einer Wahlbetätigung in Richtung des Rückwärtsgangs unterworfen ist, indem die Vorwärtsfahrtgetriebegabelwelle (53) infolge eines Empfangens einer Drehkraft des zwischenliegenden Kopfelements (62) in eine Richtung parallel zu deren Achse bewegt wird.

3. Handschaltgetriebe nach Anspruch 2, wobei:
das erste Kopfelement (61) an einem Außenumfang der Schalt- und Wählwelle (20) angebracht ist, so dass es relativ dazu drehen kann, und
das Betätigungsbetragaufnahmeelement (64) eine Schraubenfeder aufweist, die sich zwischen dem ersten Kopfelement (61) und der Schalt- und Wählwelle (20) erstreckt und angepasst ist, um sowohl einen Drehbetrag der Schalt- und Wählwelle (20) bei empfangen der Wahlbetätigungskraft durch elastische Deformation in eine Umfangsrichtung aufzunehmen, als auch das erste Kopfelement (61) zu drehen, indem sie die Wahlbetätigungskraft auf dieses überträgt.

4. Handschaltgetriebe nach Anspruch 2 oder Anspruch 3, mit:
einer Stoppeinrichtung (70), die bei einer Bewegung der Vorwärtsfahrtgetriebegabelwelle (53) in eine Richtung parallel zu deren Achse, infolge einer Aufbringung der Drehkraft des zwischenliegenden Kopfelements (62) auf das Vorhemmkopfelement (63), die Bewegung des zwischenliegenden Kopfelements (62) in einer Richtung parallel zu deren Achse beschränkt, die eine Betätigungsrichtung einer Reaktionskraft von dem Vorhemmkopfelement (63) ist, so dass das zwischenliegende Kopfelement (62) die Reaktionskraft empfängt.

5. Handschaltgetriebe nach einem der Ansprüche 2 bis 4, wobei:
wenn die Schalt- und Wählwelle (20) einer Schaltbetätigung zu der Rückwärtsgangschaltposition bei der Wahl des Rückwärtsgangs unterworfen wird, sich das erste Kopfelement (61) ebenfalls in die axiale Richtung entsprechend einer Bewegung der Schalt- und Wählwelle (20) in deren axialer Richtung bewegt, und infolgedessen, sich das erste Kopfelement (61) von dem zwischenliegenden Kopfelement (62) in die axiale Richtung zurückzieht, was bewirkt, dass das Aufbringen einer Drehkraft auf das zwischenliegende Kopfelement (62) gelöst wird, und die drängende Kraft, die von dem zwischenliegenden Kopfelement (62) auf das Vorhemmkopfelement (63) aufgebracht wird und die Vorwärtsfahrtgetriebegabelwelle (53) in einer Richtung parallel zu deren axialen Richtung bewegt, ebenfalls gelöst wird.

6. Handschaltgetriebe nach einem der Ansprüche 2 bis 5, wobei:
das zwischenliegende Kopfelement (62) angepasst ist, um sich frei in eine Richtung parallel zu der Achse der Schalt- und Wählwelle (20) bewegen zu können, und gehalten ist, um infolge einer Aufnahme einer drückenden Kraft von dem ersten Kopfelement (61) in eine Richtung parallel zu der Achse auf ein Zurückführen der Schalt- und Wählwelle (20) von der Schaltposition für den Rückwärtsgang zu einer neutralen Position einen Rückzugsvorgang in eine Richtung parallel zu der Achse durchzuführen zu können.

7. Handschaltgetriebe nach Anspruch 6, mit:
einer Drängeinrichtung (65), die auf das zwischenliegende Kopfelement (62) eine drängende Kraft in Richtung einer Drehrichtungsanfangsposition, an der die Drehkraft von dem ersten Kopfelement (61) nicht empfangen wird, und die drängende Kraft in Richtung einer Axialrichtungsanfangsposition aufbringt, an der eine drängende Kraft von dem ersten Kopfelement (61) in Richtung parallel zu deren Achse nicht empfangen wird.

## Revendications

1. Transmission manuelle comprenant :
un arbre (20) de changement de vitesse et de sélection pouvant être actionné pour effectuer une opération de sélection dans une direction de sélection et une opération de changement de vitesse dans une direction de changement de vitesse lors d'une opération de changement de vitesse,
un arbre (53) de fourchette de marche avant relié à l'arbre de changement de vitesse et de sélection à la suite d'une opération de sélection de l'arbre (20) de changement de vitesse et de sélection vers une position de sélection prescrite de changement de vitesse en marche avant lors de la sélection de changement de vitesse en marche avant et pouvant être actionné pour exécuter une opération de changement de vitesse en marche avant vers une marche avant prescrite tout en étant actionné pour activer simultanément un synchroniseur (13) en se déplaçant dans une direction axiale conformément à une opération de changement de vitesse de l'arbre (20) de sélection et de changement de vitesse, et
un élément (28) de changement de vitesse en marche arrière où l'arbre (20) de changement de vitesse et de sélection peut être actionné pour être relié à la suite d'une opération de sélection de l'arbre (20) de changement de vitesse et de sélection dans une position de sélection de changement de vitesse en marche arrière lors de la sélection d'un changement de vitesse en marche arrière et l'élément (28) de changement de vitesse de marche arrière pouvant être actionné pour exécuter une opération de changement de vitesse en marche arrière conformément à une opération de changement de vitesse de l'arbre (20) de changement de vitesse et de sélection, et un dispositif de prévention de bruit d'engrenage comprenant :
une pluralité d'éléments de transmission de force d'opération de sélection pouvant être actionnés pour transmettre une force d'opération de sélection de l'arbre (20) de changement de vitesse et de sélection au synchroniseur (13) lors d'une opération de sélection de l'arbre (20) de changement de vitesse et de sélection vers la position de sélection de changement de vitesse en marche arrière afin d'activer le synchroniseur (13) au cours de la période de réalisation de l'opération de sélection,
un élément d'absorption (64) de quantité d'actionnement prévu entre des éléments de composants adjacents dans une direction de transmission de force d'opération de sélection d'une voie de transmission de force d'opération de sélection comprenant l'arbre (20) de changement de vitesse et de sélection, la pluralité d'éléments de sélection de transmission de force d'opération de sélection, et le synchroniseur (13) et capable à la fois d'absorber une quantité de mouvement d'un élément de composant disposé en amont de celui-ci dans la direction de transmission de force d'opération de sélection par déformation élastique et de transmettre la force élastique d'un élément de composant en aval (61) disposé en aval de celui-ci dans la direction de transmission de force d'opération de sélection en tant que force d'opération de sélection,
**caractérisée en ce que**
l'élément de composant en aval (61) est ajusté extérieurement à l'arbre (20) de changement de vitesse et de sélection de manière à être capable de tourner librement autour de celui-ci,
l'élément de composant en aval (61) comprend une section de manchon (61a) formée en ayant une forme cylindrique de manière à enfermer une périphérie extérieure de l'arbre (20) de changement de vitesse et de sélection et une section d'engagement (61c) s'étendant depuis une partie d'une surface périphérique extérieure de la section de manchon (61a) vers un côté périphérique extérieur,
l'élément d'absorption (64) de quantité d'actionnement est adapté pour appliquer une force de sollicitation à l'élément de composant en aval (61), et
la section d'engagement (61c) est adaptée pour réguler une position de rotation de l'élément de composant en aval (61) en entrant en contact avec une broche de positionnement (81) prévue de manière à tourner à l'unisson avec l'arbre (20) de changement de vitesse et de sélection.

2. Transmission manuelle de la revendication 1, où l'élément de composant en aval (61) est : un premier élément de tête (61) prévu de manière à être capable de transmettre une force de rotation de l'arbre (20) de changement de vitesse et de sélection lors d'une opération de sélection de l'arbre (20) de changement de vitesse et de sélection vers la position de sélection de changement de vitesse en marche arrière, et où les éléments de transmission de force d'opération de sélection comprennent en outre
au moins un élément de tête intermédiaire (62) tournant à la suite de la réception d'une force de rotation du premier élément de tête (61) ; et
un élément de tête de pré-charge (63) agencé sur l'arbre (53) de fourchette de marche avant et activant le synchroniseur (13) pendant une période où l'arbre (20) de changement de vitesse et de sélection est soumis à une opération de sélection vers la marche arrière en déplaçant l'arbre (53) de fourchette de marche avant dans une direction parallèle à son axe à la suite de la réception d'une force de rotation de l'élément de tête intermédiaire (62).

3. Transmission manuelle de la revendication 2, où :
le premier élément de tête (61) est ajusté sur une périphérie extérieure de l'arbre (20) de changement de vitesse et de sélection de manière à être capable de tourner autour de celui-ci, et
l'élément d'absorption (64) de quantité d'actionnement comprend un ressort hélicoïdal s'étendant entre le premier élément de tête (61) et l'arbre (20) de changement de vitesse et de sélection et est configuré de manière à, à la fois absorber, par déformation élastique de celui-ci dans une direction circonférentielle, une quantité de rotation de l'arbre (20) de changement de vitesse et de sélection lors de la réception de la force d'opération de sélection et pour faire tourner le premier élément de tête (61) en lui transmettant la force d'opération de sélection.

4. Transmission manuelle de la revendication 2 ou 3, comprenant :
un moyen d'arrêt (70) qui, lors du mouvement de l'arbre (53) de fourchette de marche avant dans une direction parallèle à son axe à la suite de l'application de la force de rotation de l'élément de tête intermédiaire (62) à l'élément de tête de pré-charge (63), limite le mouvement de l'élément de tête intermédiaire (62) dans une direction parallèle à son axe, qui est une direction d'opération d'une force de réaction provenant de l'élément de tête de pré-charge (63), de sorte que l'élément de tête intermédiaire (62) reçoive la force de réaction.

5. Transmission manuelle de l'une quelconque des revendications 2 à 4, où :
lorsque l'arbre (20) de changement de vitesse et de sélection est soumis à une opération de changement de vitesse vers la position de changement de vitesse de marche arrière lors de la sélection de la marche arrière, le premier élément de tête (61) se déplace également dans la direction axiale conformément à un mouvement de l'arbre (20) de changement de vitesse et de sélection dans sa direction axiale, et par suite, le premier élément de tête (61) se retire de l'élément de tête intermédiaire (62) dans la direction axiale, provoquant la libération de l'application de la force de rotation à l'élément de tête intermédiaire (62), et la force de sollicitation qui est appliquée par l'élément de tête intermédiaire (62) à l'élément de tête de pré-charge (63) et qui déplace l'arbre (53) de fourchette de marche avant dans une direction parallèle à sa direction axiale est également libérée.

6. Transmission manuelle de l'une quelconque des revendications 2 à 5, où :
l'élément de tête intermédiaire (62) est configuré de manière à être capable de se déplacer librement dans une direction parallèle à l'axe de l'arbre (20) de changement de vitesse et de sélection et supporté de manière à être capable, à la suite de la réception d'une force de pression à partir du premier élément de tête (61) dans une direction parallèle à l'axe lors du retour de l'arbre (20) de changement de vitesse et de sélection à une position neutre à partir de la position de changement de vitesse en marche arrière, de réaliser une opération de retrait dans une direction parallèle à l'axe.

7. Transmission manuelle de la revendication 6, comprenant :
un moyen de sollicitation (65) appliquant à l'élément de tête intermédiaire (62) une force de sollicitation vers une position initiale de direction de rotation où, la force de rotation provenant du premier élément de tête (61) n'est pas reçue et une force de sollicitation vers une position initiale de direction axiale où, une force de pression provenant du premier élément de tête (61) dans une direction parallèle à son axe n'est pas reçue.
